# EUROPÄISCHE PATENTSCHRIFT

(11) **EP 1 391 691 B1**
(45) Veröffentlichungstag und Bekanntmachung des Hinweises auf die Patenterteilung: **11.01.2012**
(21) Anmeldenummer: 03017850.3
(22) Anmeldetag: 05.08.2003
(51) Int. Cl.: G01B 13/10

(54) **Verfahren und Vorrichtung zur Bestimmung des Durchmessers eines Lochs in einem Werkstück.**
Methods and apparatus for determining the diameter of a through hole in a workpiece.
Procédé de mesure du diamètre d'un trou dans une pièce à usiner.

(30) Priorität: 06.08.2002 DE 10236030; 09.09.2002 DE 10241637; 20.11.2002 DE 10254104
(43) Veröffentlichungstag der Anmeldung: 25.02.2004
(73) Patentinhaber: MYCRONA Gesellschaft für innovative Messtechnik mbH, 66793 Saarwellingen (DE)
(72) Erfinder: Brosette, Frank, 66839 Schmelz (DE)
(74) Vertreter: Mierswa, Klaus

(56) Entgegenhaltungen:
- DE-A- 10 009 946
- DE-A- 19 611 613
- US-A- 3 863 492

## Beschreibung

### Technisches Gebiet:

Die Erfindung betrifft ein Verfahren sowie eine Vorrichtung zur Bestimmung des Durchmessers eines Lochs, insbesondere Aussparung oder Bohrung, in einem Werkstück, wobei das Loch einseitig mit einem unter Druck stehenden Medium beaufschlagt wird, so dass das Loch von dem Medium durchströmt wird und ein Strahl des Mediums nach Durchströmen des Lochs aus demselben austritt.

### Stand der Technik:

Aus der DE 196 11 613 A1 ist ein Verfahren zum Vermessung von Bohrungen mit Hilfe eines optoelektronischen Meßverfahrens bekannt. Die Lage und Geometrie der Bohrung wird z.B. mit Hilfe einer Kamera ermittelt, deren optische Achse mit der Achse der Bohrung fluchtet. Die Bohrung wird vermessen, indem die Kamera nacheinander auf die Einlaufkante, auf die Auslaufkante und bei Bedarf auch auf zwischen diesen liegende Bereiche der Innenwandung der Bohrung fokussiert wird. Zur Vermessung wird das Objekt, an welchem die zu vermessende Bohrung angebracht ist, über einen Aufnahmedorn in ein Spannfutter eingespannt. Dieses ist seinerseits auf einem verstellbaren Meßtisch angeordnet. Bevorzugt wird die Bohrung mittels eines Lichtleiters innen beleuchtet.

Aus der DE 100 09 946 A1 ist eine Vorrichtung zur Vermessung einer Bohrung eines Werkstücks mittels einer optoelektronischen Sensoreinrichtung bekannt. In der Nachbarschaft der Bohrung ist ein Spiegel plazierbar, welcher die optische Achse der optoelektronischen Sensoreinrichtung umlenkt. Die optoelektronische Sensoreinrichtung kann z.B. eine CCD-Kamera sein. Eine außerhalb des Werkstücks angeordnete Strahlenquelle senden ein Strahlenbündel aus, welches z.B. mittels eines Strahlteilers in die optische Achse der optoelektronischen Sensoreinrichtung eingebracht ist und auf den Spiegel gelenkt wird, von wo das Strahlenbündel auf die Bohrung fällt. Am Werkstück reflektierte Strahlung wird über den Spiegel in die Sensoreinrichtung gelenkt.

Des Weiteren ist aus der US 3 863 492 A ein Verfahren und eine Vorrichtung zur Bestimmung des Durchmessers eines Lochs in einem Werkstück bekannt geworden, bei dem das Loch einseitig mit einem unter Druck stehenden Medium, wie Luft, beaufschlagt wird, so dass das Loch von der Luft durchströmt wird und ein Luftstrahl nach Durchströmen des Lochs aus demselben austritt. Hierzu besteht die Vorrichtung im Wesentlichen aus einem unter Druckluft abgebenden Emitterraum mit einer Austrittsdüse, vor der das mit dem Loch versehene Werkstück platziert wird, und mehreren hinter dem Werkstück angeordneten Empfängerräumen für die durch das Loch im Werkstück durchgeströmte Luft. Auch hier wird in einem Raum unter Druck ein Luftstrom erzeugt, welcher aus einer Düse austritt und auf den Luftstrahl aus dem Emitterraum auftritt, wodurch eine Druckdifferenz entsteht. Der Durchmesser des Lochs wird anschließend aus den unterschiedlichen Druckverhältnissen errechnet, welche sich in den unterschiedlichen Empfängerräumen gegenüber dem Emitterraum einstellen.

Bei Einspritzdüsen für Verbrennungsmotoren beträgt die Länge der Bohrung typischerweise z.B. ca. 1mm, während der Durchmesser der Bohrung nur ca. 1/100 bis 1/10 dieses Wertes beträgt. Wenn daher die Kamera die von derselben abgewandte Kante der Bohrung beobachtet werden soll, so erfolgt die Beobachtung durch die Bohrung hindurch, wobei die Kamera auf die zu beobachtende Kante fokussiert wird. Wegen des im Verhältnis zur Länge der Bohrung kleinen Durchmessers derselben wirkt dabei die Bohrung als optische Blende bzw. als Kollimator, d.h. Licht kann die genannte Kante der Bohrung nur innerhalb eines sehr kleinen Raumwinkels in Richtung der Kamera verlassen, da die Bohrung selbst auf dieses Licht vignettierend, d.h. strahlverengend wirkt. Der überwiegende Teil des in die Kamera einfallenden Lichts stammt daher nicht von der zu beobachtenden Kante selbst, sondern von anderen Teilen der Einspritzdüse, welche außerhalb der Fokusebene der Kamera liegen. Die Folge davon ist, dass das von der Kamera gelieferte Bild der zu beobachtenden Kante kontrastarm, verwaschen und verschmiert ist, was eine Auswertung, insbesondere eine automatische Auswertung, erschwert oder sogar vereitelt und die erzielte Messgenauigkeit verschlechtert. Dieses Problem verschärft sich mit abnehmendem Durchmesser und mit zunehmender Länge der Bohrung.

Der Erfindung liegt daher die Aufgabe zu Grunde, ein Verfahren und eine Vorrichtung zur Bestimmung des Durchmessers einer Bohrung in einem Werkstück sowie die Orientierung und die Lage der Achse der Bohrung sowie die Lage der Auslaufkante der Bohrung anzugeben, mit welchen die genannten Nachteile vermieden werden.

Diese Aufgabe wird bei einem Verfahren der eingangs genannten Gattung erfindungsgemäß dadurch gelöst, dass der Durchmesser des Lochs aus dem Durchmesser des Strahls bestimmt wird.

In weiterer Ausgestaltung der Erfindung ist auf das Werkstück ein dreidimensionales Werkstück-Koördinatensystem bezogen, wobei die Orientierung der Achse des Lochs im Werkstück-Koordinatensystem aus der Orientierung mindestens eines Abschnitts des Strahls im Werkstück-Koordinatensystem und/oder die Lage der Achse des Lochs im Werkstück-Koordinatensystem aus der Position mindestens eines Abschnitts des Strahls im Werkstück-Koordinatensystem sowie aus der Orientierung mindestens eines Abschnitts des Strahls im Werkstück-Koordinatensystem bestimmt wird.

In weiterer Ausgestaltung der Erfindung wird zur Erfassung des Strahls eine Sensoreinrichtung, insbesondere CCD-Kamera, verwendet, auf welche ein dreidimensionales Sensor-Koordinatensystem bezogen ist, wobei die Sensoreinrichtung eine optische Achse besitzt, deren Richtung, optische Achsenrichtung, im Sensor-Koordinatensystem bekannt ist, und ein Objektiv besitzt, mittels welchem die Sensoreinrichtung eine zweidimensionale Abbildung liefert und in dieser mindestens einen Abschnitt des Strahls als Strahlbild scharf abzubilden imstande ist, und einen Sensor, insbesondere CCD-Matrix, besitzt, welcher die zweidimensionale Abbildung zweidimensional aufgelöst zu erfassen imstande ist, wobei auf die zweidimensionale Abbildung ein zweidimensionales Bild-Koordinatensystem bezogen ist, dessen Orientierung in Bezug auf das Sensor-Koordinatensystem bekannt ist oder gemessen wird.

Die Aufgabe wird ferner erfindungsgemäß gelöst durch eine Vorrichtung zur Bestimmung des Durchmessers eines Lochs, insbesondere Aussparung oder Bohrung, in einem Werkstück, wobei das Loch einseitig mit einem unter Druck stehenden Medium so beaufschlagbar ist, dass das Loch von dem Medium durchströmt wird und ein Strahl des Mediums nach Durchströmen des Lochs aus demselben austritt, durch einen Druckerzeuger, insbesondere Hochdruckpumpe, der imstande ist, ein Medium unter Druck zu setzen, und eine Sensoreinrichtung, insbesondere CCD-Kamera, mit einem Objektiv, mittels welchem die Sensoreinrichtung eine zweidimensionale Abbildung zu liefern und in dieser mindestens einen Abschnitt des Strahls als Strahlbild scharf abzubilden imstande ist, und mit einem Sensor, insbesondere CCD-Matrix, welcher die zweidimensionale Abbildung zweidimensional aufgelöst zu erfassen imstande ist, so dass der Durchmesser des Strahls mittels der Sensoreinrichtung aus dem Abbildungsmaßstab des Objektivs, der Breite des Strahlbildes sowie aus dem Abstand zwischen Sensoreinrichtung und dem scharf abgebildeten Abschnitt des Strahls bestimmbar und der Durchmesser des Lochs aus dem Durchmesser des Strahls bestimmbar ist.

In weiterer erfindungsgemäßer Ausgestaltung ist auf das Werkstück ein dreidimensionales Werkstück-Koordinatensystem bezogen.

Das Loch kann insbesondere eine zylindrische oder im Wesentlichen zylindrische oder eine konische Bohrung sein.

Bevorzugt wird zur Erfassung des Strahls eine Sensoreinrichtung, insbesondere CCD-Kamera, verwendet, auf welche ein dreidimensionales Sensor-Koordinatensystem bezogen ist, wobei die Sensoreinrichtung eine optische Achse besitzt, deren Richtung, optische Achsenrichtung, im Sensor-Koordinatensystem bekannt ist, ein Objektiv besitzt, mittels welchem die Sensoreinrichtung eine zweidimensionale Abbildung liefert und in dieser mindestens einen Abschnitt des Strahls als Strahlbild scharf abzubilden imstande ist, und einen Sensor, insbesondere CCD-Matrix, besitzt, welcher die zweidimensionale Abbildung zweidimensional aufgelöst zu erfassen imstande ist, wobei auf die zweidimensionale Abbildung ein zweidimensionales Bild-Koordinatensystem bezogen ist, dessen Orientierung in Bezug auf das Sensor-Koordinatensystem bekannt ist oder gemessen wird.

Der Durchmesser des Strahls kann, nachdem die Sensoreinrichtung auf einen Abschnitt des Strahls gerichtet wurde, aus dem Abbildungsmaßstab des Objektivs, der Breite des Strahlbildes sowie aus dem Abstand zwischen Sensoreinrichtung und dem scharf abgebildeten Abschnitt des Strahls bestimmt werden. Bei bekanntem Abbildungsmaßstab des Objektives und bekanntem Abstand zwischen der Sensoreinrichtung und dem scharf abgebildeten Abschnitt des Strahls kann nämlich aus der Breite des Strahlbildes, d.h. seiner Ausdehnung senkrecht zur Achse des Strahlbildes sehr leicht der wahre Durchmesser des Strahls bestimmt werden. Unter der Annahme, daß der Strahldurchmesser gleich dem Durchmesser des Lochs ist, ist somit erfindungsgemäß der Durchmesser des Lochs bestimmt.

Das Loch braucht nicht notwendig zylindrisch zu sein; vielmehr kann das Loch z.B. einen konischen, elliptischen, polygonförmigen oder unregelmäßig geformten Querschnitt besitzen. Mittels des erfindungsgemäßen Verfahrens kann der Lochdurchmesser in einer Richtung quer zur Blickrichtung der Sensoreinrichtung bestimmt werden; anschließend kann das Verfahren bei geänderter Blickrichtung der Sensoreinrichtung entsprechend wiederholt werden. Auf diese Weise kann der Durchmesser des Lochs in jeder beliebigen Richtung bestimmt werden.

Die Durchmesserbestimmung kann somit bei veränderter Relativorientierung zwischen Strahl und Sensoreinrichtung wiederholt werden. Beispielsweise kann das Werkstück bei unveränderter Position der Sensoreinrichtung um einen bestimmten Drehwinkel um die Achse des Strahls gedreht werden, so daß die Sensoreinrichtung den Strahl von einer anderen Seite sieht. Falls sich hierbei ein abweichender Durchmesser ergibt, zeigt die Abweichung eine Abweichung des Strahlquerschnitts und damit des Lochquerschnitts von der Kreisform an. Die Querschnittsform des Lochs kann durch mehrfache Wiederholung dieser Vorgehensweise für eine Mehrzahl von Drehwinkeln sehr genau ermittelt werden.

Ferner brauchen die durch die Einlaufkante des Lochs und die durch die Auslaufkante des Lochs aufgespannten Flächen nicht notwendig kongruent zu sein. Beispielsweise kann das Loch konusförmig ausgebildet sein. In diesem Fall kann vorteilhaft ein Gas als Medium verwendet werden, so daß sich der Strahl, je nachdem, ob sich das Loch von seiner Einlaufkante zu seiner Auslaufkante erweitert oder verengt, nach Durchströmen des Lochs konisch aufweitet oder nach Austritt aus dem Loch zunächst konisch verjüngt und nach Durchlaufen eines Überkreuzungspunktes wieder aufweitet. In diesen Fällen können aus dem Öffnungswinkel oder dem Verjüngungswinkel des Strahls, aus seinem Durchmesser an einer vorgegebenen Stelle und aus der Entfernung dieser Stelle von der Auslaufkante des Lochs der Konuswinkel des Lochs sowie der Durchmesser derjenigen Fläche bestimmt werden, welche durch die Auslaufkante des Lochs aufgespannt wird. Um nach Durchströmen des Lochs eine Störung der linearen Bewegung der Atome bzw. Moleküle des Strahls durch die umgebende Luft zu vermeiden, kann das Verfahren vorteilhaft im Vakuum durchgeführt werden.

Gemäß einer anderen Variante wird als Medium ein solches verwendet, welches sich vor Eintritt in das Loch, d.h. unter Druck, in flüssigem Zustand befindet und nach Austritt aus dem Loch, d.h. in entspanntem Zustand, in gasförmigem oder z.B. in einem aerosolartigen Zustand befindet.

Der Abstand zwischen Sensoreinrichtung und Strahl kann z.B. aus der Bildweite des Strahlbildes bestimmt werden. Dies ist möglich, weil die Bildweite des Strahlbildes, d.h. der Abstand zwischen Objektiv und Bildebene des Strahlbildes, bei unendlicher Entfernung des Strahls vom Objektiv gleich der Brennweite des Objektivs ist, bei Abnehmen dieser Entfernung jedoch zunimmt. Die Bildweite des Strahlbildes ist daher ein Maß für die genannte Entfernung. In der Praxis kann die Bestimmung der Bildweite z.B. dadurch erfolgen, daß das Objektiv auf den Strahl fokussiert wird und die Optik mit einer kalibrierten Entfernungsskala versehen ist, deren Maßzahl die Entfernung zwischen der Sensoreinrichtung und dem abgebildeten Objekt, d.h. dem Strahl angibt. Mit einem derartigen Einstellen des Objektivs auf eine bestimmte Entfernung ist eine Änderung der Bildweite verbunden, welche nicht explizit gemessen wird, aber selbstverständlich in der Kalibrierung der Skala zum Ausdruck kommt.

Gemäß einer anderen Variante der Erfindung wird der Abstand zwischen Sensoreinrichtung und Strahl mittels eines Laserabstandsmeßsystems bestimmt. Zu diesem Zweck weist eine Ausführungsform der erfindungsgemäßen Vorrichtung ein Laserabstandsmeßsystem auf, mittels welchem die Entfernung zwischen der Sensoreinrichtung und dem Strahl meßbar ist.

Gemäß einer weiteren Variante wird als Sensoreinrichtung eine solche mit einem begrenzten Tiefenschärfebereich verwendet, welcher sich in einer vorgegebenen Entfernung von der Sensoreinrichtung befindet, und diese gegenüber dem Werkstück so angeordnet, daß sich die Sensoreinrichtung gegenüber dem Werkstück in einer ersten Relativposition und in einer ersten Relativorientierung befindet und ein Abschnitt des Strahls, erster Strahlabschnitt, im Tiefenschärfebereich liegt, wobei die Sensoreinrichtung als Abbildung ein erstes 2D-Bild liefert, auf welchem der erste Strahlabschnitt scharf als erstes Strahlbild abgebildet ist, so daß die Entfernung zwischen der Sensoreinrichtung und dem scharf abgebildeten ersten Strahlabschnitt durch den Abstand zwischen der Sensoreinrichtung und dem Tiefenschärfebereich gegeben ist. Daher gemäß einer Ausführungsform der Erfindung die Sensoreinrichtung eine solche mit einem begrenzten Tiefenschärfebereich.

Die Tiefe des Tiefenschärfebereichs geht hierbei selbstverständlich als Meßunsicherheit in die Entfernungsbestimmung ein; diese Meßunsicherheit läßt sich jedoch auf verschiedene Weisen sehr klein halten.

Eine Möglichkeit hierzu besteht darin, von vornherein ein Objektiv mit sehr kleinem Tiefenschärfebereich zu verwenden, was z.B. durch Verwendung eines Objektivs mit großem Öffnungsverhältnis erreicht werden kann.

Eine andere Möglichkeit besteht darin, die optische Achse des Objektivs gegenüber dem Strahl so auszurichten, daß das Medium, welches den Strahl bildet, sich in einem schrägen Winkel von dem Objektiv entfernt, so daß sich ein Teil des abgebildeten Abschnitts Strahls vom Objektiv aus gesehen vor dem Tiefenschärfebereich, ein anderer Teil des abgebildeten Abschnitts des Strahls im Tiefenschärfebereich und ein weiterer Teil des abgebildeten Abschnitts des Strahls hinter dem Tiefenschärfebereich befindet. Nun kann das Zentrum des scharf abgebildeten Abschnitts des Strahls der Mitte des Tiefenschärfebereichs zugeordnet werden, so daß die genannte Meßunsicherheit wesentlich verringert ist.

Gemäß einer bevorzugten Variante der Erfindung werden
a) die erste Relativorientierung und die erste Relativposition gemessen,
b) ein Punkt auf der Längsachse des ersten Strahlbildes als Bezugspunkt, erster Bezugspunkt, gewählt,
c) die Koordinaten des ersten Bezugspunktes, erste 2D-Koordinaten, im Bild-Koordinatensystem gemessen, und
d) aus den so gewonnenen Meßergebnissen die Lage des ersten Bezugspunktes im Werkstück-Koordinatensystem bestimmt.

Falls die Orientierung des Strahls im Werkstück-Koordinatensystem bekannt ist, kann die Lage der Bohrung im Werkstück-Koordinatensystem aus dieser orientierung sowie der Lage des ersten Bezugspunktes im Raum durch Extrapolation bestimmt werden.

Wenn die Lage von zwei Achsenpunkten des Strahls im Werkstück-Koordinatensystem bekannt ist, können die Orientierung und die Lage des Strahls im Werkstück-Koordinatensystem und damit auch die Orientierung und Lage der Achse Bohrung im Werkstück-Koordinatensystem bestimmt werden; hierbei wird von der Voraussetzung ausgegangen, daß die Krümmung des Strahls vernachlässigbar ist.

Daher wird gemäß einer bevorzugten Variante diese Vorgehensweise für einen anderen Bezugspunkt in entsprechender Weise nochmals ausgeführt. Hierzu wird die Sensoreinrichtung gegenüber dem Werkstück so angeordnet, daß sich die Sensoreinrichtung gegenüber dem Werkstück in einer zweiten Relativposition und in einer zweiten Relativorientierung befindet und ein zweiter Strahlabschnitt im Tiefenschärfebereich liegt, wobei die Sensoreinrichtung als Abbildung ein zweites 2D-Bild liefert, auf welchem der zweite Strahlabschnitt scharf als zweites Strahlbild abgebildet ist, so daß die Entfernung zwischen der Sensoreinrichtung und dem scharf abgebildeten zweiten Strahlabschnitt ebenfalls durch den Abstand zwischen Sensoreinrichtung Tiefenschärfebereich gegeben ist; es werden
a) die zweite Relativorientierung und die zweite Relativposition gemessen,
b) auf der Längsachse des zweiten Strahl bildes ein von dem ersten Bezugspunkt beabstandeter zweiter Bezugspunkt, gewählt,
c) die Koordinaten des zweiten Bezugspunktes, zweite 2D-Koordinaten, im Bild-Koordinatensystem gemessen,
d) aus den so gewonnenen Meßergebnissen die Lage des zweiten Bezugspunktes im Werkstück-Koordinatensystem bestimmt, und
e) aus der Lage des ersten und des zweiten Bezugspunktes im Werkstück-Koordinatensystem die Orientierung und Lage der Achse des Lochs im Werkstück-Koordinatensystem bestimmt.

Die Voraussetzung, daß die Krümmung des Strahls vernachlässigbar ist, kann leicht erfüllt werden, indem das Mediums mit hinreichendem Druck durch das Medium gepreßt wird und der erste und der zweite Bezugspunkt beide in relativ geringer Entfernung von dem Loch gewählt werden. Ein andere Möglichkeit, die Erfüllung der genannten Voraussetzung zu gewährleisten, besteht darin, das Werkstück so auszurichten, daß der Strahl im wesentlichen senkrecht nach unten austritt.

Die Orientierung des Strahls im Werkstück-Koordinatensystem kann auch aus der Richtung der Projektionen des Strahls auf mindestens zwei verschiedene Ebenen bestimmt werden. Gemäß einer Variante der Erfindung wird wie folgt vorgegangen:
a) die Sensoreinrichtung und das Werkstück werden relativ zueinander so angeordnet, daß sich die Sensoreinrichtung gegenüber dem Werkstück in einer dritten Relativposition und in einer dritten Relativorientierung befindet, wobei die Sensoreinrichtung als Abbildung ein drittes 2D-Bild liefert, auf welchem mindestens ein dritter Strahlabschnitt als drittes Strahlbild scharf abgebildet ist, und wobei die optische Achse der Sensoreinrichtung im Werkstück-Koordinatensystem in einer ersten Raumrichtung verläuft, welche durch die dritte Relativorientierung bestimmt ist,
b) die dritte Relativorientierung wird gemessen,
c) auf dem dritten 2D-Bild wird ein auf der Längsachse des dritten Strahlbildes gelegener dritter Bezugspunkt ausgewählt und dessen Koordinaten, im folgenden als dritte 2D-Koordinaten bezeichnet, im Bild-Koordinatensystem gemessen,
d) die Sensoreinrichtung und das Werkstück werden relativ zueinander so angeordnet, daß sich die Sensoreinrichtung gegenüber dem Werkstück in einer von der dritten Relativposition in axialer Richtung des Strahls beabstandeten vierten Relativposition, jedoch weiterhin in der dritten Relativorientierung befindet, wobei die Sensoreinrichtung als Abbildung ein viertes 2D-Bild liefert, auf welchem mindestens ein vierter Strahlabschnitt als viertes Strahlbild scharf abgebildet ist,
e) die Lage der vierten Relativposition wird in Bezug auf die dritte Relativposition gemessen,
f) auf dem vierten 2D-Bild wird ein auf der Längsachse des vierten Strahlbildes gelegener vierter Bezugspunkt ausgewählt und dessen Koordinaten, im folgenden als vierte 2D-Koordinaten bezeichnet, im Bild-Koordinatensystem gemessen, und
g) aus den so gewonnenen Meßergebnissen wird die Lage der Projektionen des dritten und des vierten Bezugspunktes (P3,P4) auf eine zur ersten Raumrichtung senkrechte Ebene und hieraus die Lage und Richtung der Projektion des Strahls (4) auf diese Ebene im Werkstück-Koordinatensystem (WKS) bestimmt.

Die Sensoreinrichtung kann zur Ausführung des Schrittes d) gegenüber dem Werkstück insbesondere dadurch in die vierte Relativposition gebracht werden, daß sie um einen bestimmten Weg in Richtung oder Gegenrichtung des Strahls verfahren wird, wobei die Orientierung der Sensoreinrichtung unverändert beibehalten wird.

Diese Vorgehensweise kann mit veränderten Werten für die dritte und vierte Relativposition sowie die dritte Relativorientierung erneut durchgeführt werden. Auf diese Weise erhält man eine Projektion des Strahls auf eine andere Ebene.

Gemäß einer Variante der Erfindung werden daher die Schritte a) bis g) mit jeweils veränderten Werten für die dritte und vierte Relativposition sowie die dritte Relativorientierung erneut durchgeführt und aus den so erhaltenden Ergebnissen die Lage und Orientierung des Strahls im Werkstück-Koordinatensystem und hieraus die Orientierung und Lage der Achse des Lochs im Werkstück-Koordinatensystem bestimmt werden. Dies ist möglich, da nun die Projektionen des Strahls auf zwei verschiedene Ebenen bekannt sind. Hierbei braucht die Entfernung zwischen Sensoreinrichtung und ihrem Tiefenschärfebereich zur Bestimmung der Orientierung und Lage des Strahls im Raum nicht herangezogen zu werden, d.h. diese Variante des Verfahrens ist auch ohne Kenntnis der genannten Entfernung durchführbar.

Gemäß einer anderen Variante der Erfindung wird zur Bestimmung einer Komponente der Orientierung des Strahls im Werkstück-Koordinatensystem wie folgt vorgegangen:
a) die Sensoreinrichtung und das Werkstück werden relativ zueinander so angeordnet, daß sich die Sensoreinrichtung gegenüber dem Werkstück in einer fünften Relativposition und in einer fünften Relativorientierung befindet, wobei die Sensoreinrichtung als Abbildung ein fünftes 2D-Bild liefert, auf welchem mindestens ein fünfter Strahlabschnitt als fünftes Strahlbild scharf abgebildet ist, und wobei die optische Achse der Sensoreinrichtung im Werkstück-Koordinatensystem in einer zweiten Raumrichtung verläuft, welche durch die fünfte Relativorientierung bestimmt ist,
b) die fünfte Relativorientierung wird gemessen,
c) auf dem fünften 2D-Bild werden ein fünfter und ein von diesem beabstandeter sechster Bezugspunkt gewählt, welche beide auf der Längsachse des fünften Strahlbildes liegen, d.h. der fünfte und der sechste Bezugspunkt werden beide aus derselben Abbildung, nämlich dem fünften 2D-Bild, ausgewählt,
d) die Koordinaten des fünften und des sechsten Bezugspunktes werden jeweils im Bild-Koordinatensystem gemessen,
e) aus den so gewonnenen Meßergebnissen wird die Lage der Projektionen des fünften und des sechsten Bezugspunktes auf eine zur zweiten Raumrichtung senkrechte Ebene und hieraus die Lage und Richtung der Projektion des Strahls auf diese Ebene im Werkstück-Koordinatensystem bestimmt.

Auch diese Vorgehensweise kann mit veränderten Werten für die fünfte Relativposition sowie die fünfte Relativorientierung erneut durchgeführt werden. Auf diese Weise erhält man eine Projektion des Strahls auf eine weitere Ebene.

Gemäß einer Variante werden daher die Schritte a) bis e) mit jeweils veränderten Werten für die fünfte Relativposition sowie die fünfte Relativorientierung erneut durchgeführt und aus den so erhaltenden Ergebnissen die Orientierung und Lage des Strahls im Werkstück-Koordinatensystem und hieraus die Orientierung und Lage der Achse des Lochs im Werkstück-Koordinatensystem bestimmt. Hierzu ist also eine Kenntnis der Entfernung zwischen Sensoreinrichtung und ihrem Tiefenschärfebereich ebenfalls nicht erforderlich.

Die Orientierung und Lage des Strahls lassen sich des weiteren auch durch eine Kombination der beiden letztgenannten Varianten bestimmen, falls die erste und die zweite Raumrichtung nicht identisch sind. Gemäß einer Variante der Erfindung werden daher die erste und die zweite Raumrichtung nicht parallel zueinander gewählt und aus der Lage und Richtung der Projektion des Strahls auf die zur ersten Raumrichtung senkrechte Ebene sowie aus der Lage und Richtung der Projektion des Strahls auf die zur zweiten Raumrichtung senkrechte Ebene, jeweils im Werkstück-Koordinatensystem, die Orientierung und Lage des Strahls im Werkstück-Koordinatensystem und hieraus die Orientierung und Lage der Achse des Lochs im Werkstück-Koordinatensystem bestimmt.

Gemäß einer bevorzugten Variante des Verfahrens wird
a) die erste oder zweite oder dritte oder vierte oder fünfte oder sechste Relativposition und/oder die erste oder zweite oder dritte oder fünfte Relativorientierung so gewählt, daß auf dem ersten bzw. zweiten bzw. dritten bzw. vierten bzw. fünften bzw. sechsten 2D-Bild ein Teil der Auslaufkante des Lochs als Kurve abgebildet ist,
b) der erste oder zweite oder dritte oder vierte oder fünfte oder sechste Bezugspunkt auf der Verbindungsgeraden der Enden mittig zwischen denselben gewählt, und
c) die Lage des Schnittpunktes der Achse des Strahls mit der Ebene der Auslaufkante im Werkstück-Koordinatensystem als identisch mit der Lage des ersten bzw. zweiten bzw. dritten bzw. vierten bzw. fünften bzw. sechsten Bezugspunktes im Werkstück-Koordinatensystem angenommen.

Gemäß dieser Variante wird also die Sensoreinrichtung auf den Strahlanfang und damit auf die Auslaufkante des Lochs selbst gerichtet. Der auf dem so erhaltenen 2D-Bild sichtbare Teil der Auslaufkante wird als Kurve abgebildet.

Aus der Lage der Enden der Kurve auf dem so erhaltenen 2D-Bild wird somit auf die Lage des Zentrums des Auslaufkante im geschlossen. Damit kann erfindungsgemäß neben dem Durchmesser der Bohrung und neben der Orientierung und Lage der Achse der Bohrung auch die Lage des Lochs selbst bestimmt werden. Das so erhaltene 2D-Bild kann an die Stelle des ersten, des zweiten, des dritte, des vierten oder des fünften 2D-Bildes treten. Ebenso kann der in der oben erläuterten Weise gewählte Bezugspunkt den ersten bzw. zweiten bzw. dritten bzw. vierten bzw. fünften bzw. sechsten Bezugspunkt, welche oben erläutert wurden, ersetzen. Dies bedeutet, die oben erläuterten Verfahren zur Bestimmung der Orientierung und Lage der Achse des Lochs können mit Hilfe der in Rede stehenden Variante so ergänzt werden, daß zusätzlich auch eine Bestimmung der Lage der Auslaufkante des Lochs im Werkstück-Koordinatensystem erfolgt.

Selbstverständlich kann die Relativposition zwischen Sensoreinrichtung und Werkstück als Spezialfall so gewählt werden, daß die Kurve eine Gerade ist. In diesem Fall decken sich die Verbindungsgerade und die Kurve auf dem 2D-Bild. Unter der bereits oben erläuterten Voraussetzung, daß die z.B. schwerkraftbedingte Krümmung des Strahls vernachlässigbar ist, sind die Orientierung des Strahls und diejenige des Lochs identisch. Ferner kann unter dieser Voraussetzung die Lage des Lochs aus der Lage des Strahls im Raum und lineare Extrapolation der Strahlrichtung bestimmt werden. Mit Hilfe der ersten Relativposition kann die Flußrichtung des Strahls auf dem ersten 2D-Bild bestimmt werden, so daß die Extrapolation zu einem eindeutigen Ergebnis führt.

Die Sensoreinrichtung ist vorzugsweise eine CCD-Kamera, welche eine digitale Abbildung liefert und an eine EDV-Einrichtung angeschlossen ist. Die Lage und der Verlauf und die Schärfe des Bildes des Strahls können auf diese Weise mittels geeigneter Software, z.B. Kantenerkennung, automatisch erkannt werden.

Selbstverständlich brauchen die genannten Bezugspunkte nicht notwendigerweise jeweils auf den Längsachsen der Strahlbilder zu liegen, sondern können von diesen beabstandet sein; bei bekanntem Abstand des Bezugspunktes von der Längsachse kann nämlich jeweils die Lage des Fußpunktes des Lotes des ersten Bezugspunktes auf die Längsachse berechnet werden.

Gemäß einer bevorzugten Variante der Erfindung wird zur Positionierung des Werkstücks gegenüber der Sensoreinrichtung ein Mehrkoordinatenmeßgerät verwendet, an welchem das Werkstück angeordnet ist und mittels welchem dieses gegenüber der Sensoreinrichtung dreidimensional translatorisch verfahrbar ist. Zu diesem Zweck kann die erfindungsgemäße Vorrichtung ein Mehrkoordinatenmeßgerät aufweisen, mittels welchem das Werkstück gegenüber der Sensoreinrichtung dreidimensional translatorisch verfahrbar ist.

Alternativ dazu kann zur Positionierung der Sensoreinrichtung gegenüber dem Werkstück ein Mehrkoordinatenmeßgerät verwendet werden, an welchem die Sensoreinrichtung angeordnet ist und mittels welchem diese gegenüber dem Werkstück dreidimensional translatorisch verfahrbar ist. Zu diesem Zweck kann die erfindungsgemäße Vorrichtung ein Mehrkoordinatenmeßgerät aufweisen, mittels welchem die Sensoreinrichtung gegenüber dem Werkstück dreidimensional translatorisch verfahrbar ist.

Die Verwendung eines Mehrkoordinatenmeßgerätes erlaubt das Einstellen einer vorgegebenen Relativposition auf einfache und schnelle Weise. Das Mehrkoordinatenmeßgerät kann ferner mit Winkelaufnehmern ausgestattet sein, welche auch ein Einstellen einer vorgegebenen Relativorientierung erlauben.

Die Verwendung eines Mehrkoordinatenmeßgerätes erlaubt ferner eine vollständige Automatisierung des Verfahrens. Hierzu wird das Mehrkoordinatenmeßgerät mit der EDV-Einrichtung verbunden und mittels geeigneter Steuerungssoftware entsprechend den einzelnen Verfahrensschritten gesteuert.

Insbesondere kann das Werkstück gegenüber der Sensoreinrichtung so angeordnet und orientiert sein bzw. werden, daß der Strahl in derjenigen Ebene verläuft, welche durch die X-Achse und die Y-Achse des Sensor-Koordinatensystems aufgespannt wird. Vorzugsweise ist das letztere so gewählt, daß seine X-Achse und seine Y-Achse zugleich die Ebene des Bild-Koordinatensystems aufspannen, wobei die X-Achse in der horizontalen Richtung, die Y-Achse in der vertikalen Richtung des Bild-Koordinatensystems verlaufen. Die 2D-Koordinaten können in diesem Fall vorteilhafterweise ebenfalls auf die X-bzw. Y-Achse des Sensor-Koordinatensystems bezogen sein, da diese im genannten Fall mit der X- bzw.- Y-Achse des Bild-Koordinatensystems zusammenfallen, so daß der mit der Durchführung des erfindungsgemäßen Verfahrens verbundene Berechnungsaufwand reduziert wird.

Gemäß einer weiteren Ausführungsform weist das Mehrkoordinatenmeßgerät eine X-, eine Y- und eine Z-Verfahrachse auf, wobei und das Werkstück gegenüber dem Mehrkoordinatenmeßgerät so angeordnet und orientiert ist, daß der Strahl in derjenigen Ebene verläuft, welche durch die X-Verfahrachse und die Y-Verfahrachse des Mehrkoordinatenmeßgerätes aufgespannt wird. Bevorzugt sind die X-und die Y-Achse des Sensor-Koordinatensystems so gewählt, daß sie zu der X-bzw.- Y-Verfahrachse des Mehrkoordinatenmeßgerätes parallel verlaufen.

Als Medium kann eine Flüssigkeit oder ein Gas verwendet werden. In einer vorteilhaften Variante der Erfindung wird das Medium nach Durchströmen des Lochs aufgefangen und befindet sich in einem Kreislauf. Gemäß einer bevorzugten Ausführungsform der Erfindung weist daher die erfindungsgemäße Vorrichtung ein oben offenes Auffanggefäß auf, in dessen Inneres der Strahl gerichtet ist und welches mit dem Druckerzeuger so verbunden ist, daß das Medium nach Durchströmen des Lochs in das Auffanggefäß, von dort zum Druckerzeuger und von diesem wieder in das Loch gelangt, so daß sich das Medium in einem Kreislauf befindet. Auf diese Weise wird ein Verlust des Mediums nach Durchströmen des Lochs verhindert, was für die Wirtschaftlichkeit bzw. Umweltfreundlichkeit des erfindungsgemäßen Verfahrens vor allem dann bedeutsam ist, wenn ein teures Medium, z.B. eine Spezialflüssigkeit, bzw. ein umweltschädliches Medium, z.B. ÖI, verwendet wird. Falls das Medium eine Flüssigkeit ist, z.B. Wasser, wird auf diese Weise eine Beregnung der Umgebung des Werkstücks durch den Strahl vermieden.

Gemäß einer Ausgestaltung der Erfindung wird die Flüssigkeit oder das Gas gegenüber der Umgebungstemperatur erwärmt und als Sensoreinrichtung eine solche verwendet, welche die Wärmestrahlung der Flüssigkeit bzw. des Gases zu erfassen imstande ist. Gemäß einer bevorzugten Ausführungsform der Erfindung sind daher die Flüssigkeit oder das Gas gegenüber der Umgebungstemperatur mittels einer Heizung erwärmbar, wobei die Sensoreinrichtung die Wärmestrahlung der Flüssigkeit bzw. des Gases zu erfassen imstande ist. Auf diese Weise kann ein sehr hoher Kontrast zwischen Strahlbild und Hintergrund erreicht werden, was vor allem dann vorteilhaft ist, wenn der Durchmesser der Bohrung sehr klein oder das Medium im sichtbaren Licht transparent ist, wie z.B. Wasser oder viele Gase.

Eine andere Möglichkeit, die Sichtbarkeit des Strahls zu verbessern, besteht darin, daß als Medium eine Flüssigkeit oder ein Gas verwendet wird, welcher bzw. welchem ein Farbstoff zugesetzt ist; dessen Farbe wird bevorzugt komplementär zur Farbe des Hintergrundes gewählt.

Eine weitere Möglichkeit, die Sichtbarkeit des Strahls zu verbessern, besteht darin, daß als Medium eine luminiszente Flüssigkeit oder ein luminiszentes Gas verwendet wird.

Das Werkstück kann ein Hohlkörper sein, welcher eine Mehrzahl von mit dem unter Druck stehenden Medium beaufschlagten Löchern bzw. Bohrungen aufweist, wobei zur Durchführung des Verfahrens alle bis auf eines der Löcher verstopft oder verschlossen werden. Das austretende Medium wird gemäß einer bevorzugten Variante aufgefangen.

Gemäß einer bevorzugten Ausführungsform weist die erfindungsgemäße Vorrichtung daher einen Sperrmechaniusmus auf, mittels welchem alle bis auf eines der Löcher verstopfbar oder verschließbar sind. Des weiteren kann das austretende Medium auffangbar sein.

Gemäß einer Variante wird eine in die Flüssigkeit eintauchende Lichtquelle dazu benutzt, den Strahl unter Ausnutzung eines Lichtleitereffektes von innen zu beleuchten. Gemäß einer Ausführungsform weist daher die erfindungsgemäße Vorrichtung eine in die Flüssigkeit eintauchende Lichtquelle auf, welche den Strahl unter Ausnutzung eines Lichtleitereffektes von innen zu beleuchten imstande ist.

Die Erfindung eignet sich insbesondere sehr vorteilhaft dazu, bei der industriellen automatischen Massenproduktion von Werkstücken mit Bohrungen Fertigungsabweichungen in Lage, Orientierung und Durchmesser der Bohrung festzustellen. Gemäß einer bevorzugten Variante ist das Werkstück mittels einer Drehlagerung um eine Achse drehbar gehaltert. Insbesondere kann das Werkstück 1 eine Einspritzdüse für eine Verbrennungskraftmaschine sein und die Drehlagerung so eingerichtet sein, daß diese eine Drehung der Einspritzdüse um ihre Längsachse erlaubt, was ein Ausrichten des Strahls in eine bestimmte Richtung erleichtert.

Kurzbeschreibung der Zeichnung, in welcher zeigen:
- Fig. 1: eine perspektivische Darstellung eines Mehrkoordinatenmeßgerätes mit einer CCD-Kamera und einem Meßtisch, auf welchem ein Werkstück mit einer Bohrung angeordnet ist,
- Fig. 2 - Fig. 6: je ein von der CCD-Kamera von Fig. 1 geliefertes 2D-Bild, auf welchem jeweils ein Strahlbild abgebildet ist, und
- Fig. 7: ein von der CCD-Kamera von Fig. 1 geliefertes 2D-Bild, auf welchem ein Strahlbild und ein Teil der Auslaufkante der Bohrung abgebildet ist.

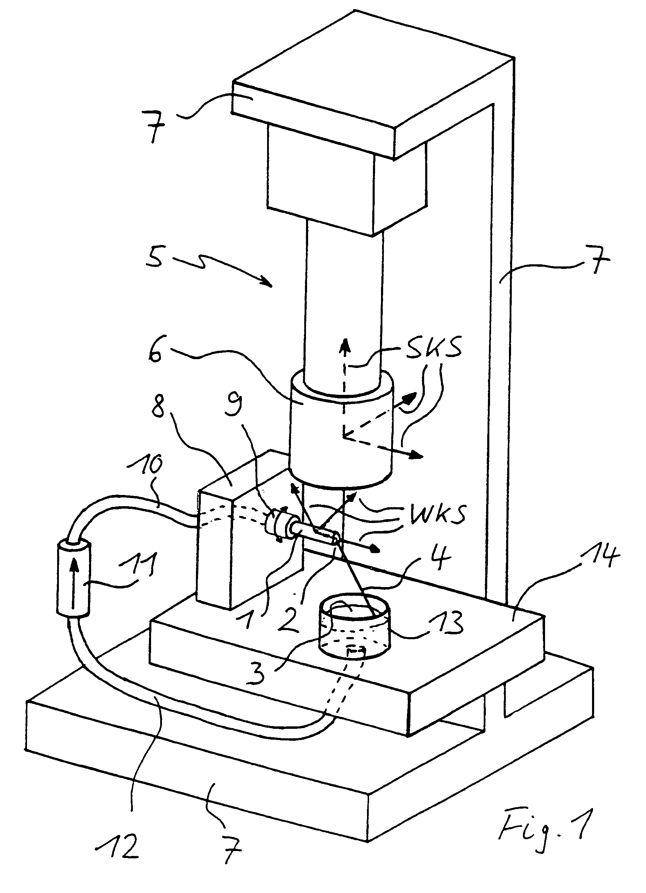

Alle Figuren 1 bis 7 beziehen sich auf bevorzugte Varianten der Erfindung. Im folgenden wird von der leicht erfüllbaren Voraussetzung ausgegangen, daß die Krümmung des Strahls für die Durchführung des erfindungsgemäßen Verfahrens vernachlässigbar ist.

Fig. 1 zeigt in perspektivischer Darstellung eine bevorzugte Ausführungsform einer erfindungsgemäßen Vorrichtung mit einem Mehrkoordinatenmeßgerät 7, einem Druckerzeuger 11, welcher als Hochdruckpumpe 11 ausgebildet ist, einer CCD-Kamera 5 und einem Meßtisch 14, auf welchem ein Werkstück 1 mit einem Loch 2 angeordnet ist. Das Loch 2 ist im vorliegenden Beispiel eine im wesentlichen zylindrische oder konische Bohrung.

An dem Mehrkoordinatenmeßgerät 7 ist eine CCD-Kamera 5 mit einem Objektiv 6 starr angeordnet. Auf die CCD-Kamera 5 ist ein Sensor-Koordinatensystem SKS bezogen. Das Mehrkoordinatenmeßgerät 7 besitzt einen Meßtisch 14, an welchem eine Haltevorrichtung 8 angeordnet ist. An dieser ist eine Drehlagerung 9 angeordnet, welche zur drehbaren Halterung eines Werkstücks 1 dient, welches ein Hohlkörper ist und welches insbesondere eine Einspritzdüse für eine Verbrennungskraftmaschine sein kann. Das Werkstück 1 besitzt eine Längsachse, welche mit der Drehachse der Drehlagerung 9 zusammenfällt, so daß das Werkstück 1 mittels der Drehlagerung 9 um seiner Längsachse rotierbar ist. Auf das Werkstück ist ein Werkstück-Koordinatensystem WKS bezogen, dessen z-Achse mit der Längsachse des Werkstücks1 zusammenfällt.

Das Werkstück 1 besitzt eine im wesentlichen zylindrische oder konische Bohrung 2. Der Übergang der Wandung der Bohrung in die Innenwandung des Werkstücks 1 ist durch eine im wesentlichen kreisförmige Einlaufkante gebildet, die die innere Mündung umläuft. Ebenso ist der Übergang der Wandung der Bohrung in die Außenwandung des Werkstücks 1 durch eine im wesentlichen kreisförmige Auslaufkante gebildet, welche die äußere Mündung der Bohrung 2 umläuft.

Mittels der Hochdruckpumpe 11 und einem Schlauch 11 wird eine Flüssigkeit mit Druck in das Innere des Werkstücks 1 gepumpt, so daß die Bohrung 2 einseitig, nämlich von ihrer inneren Mündung her, mit der unter Druck stehenden Flüssigkeit beaufschlagt ist. Die Folge davon ist, daß die Flüssigkeit die Bohrung 2 in Richtung von der Einlauf- zur Auslaufkante durchströmt und ein Strahl 4 der Flüssigkeit nach Durchströmen der Bohrung 2 aus derselben austritt. Dank der Anordnung des Werkstücks 1 auf der Drehlagerung 9 ist das Werkstück 1 um 360° um seine Längsachse rotierbar, so daß der Strahl 4 in eine Vielzahl von Richtungen lenkbar ist. Um eine ungewollte Rotation des Werkstücks 1 aufgrund der Rückstoßwirkung des Strahls 4 zu unterbinden, ist die Drehlagerung 9 mit einem nicht gezeigten Arretiermechanismus versehen.

Auf dem Meßtisch 14 ist ferner ein oben offenes Auffanggefäß 13 so angeordnet, daß der Strahl 4 in das Innere des Auffanggefäßes 13 gerichtet ist. Dort wird die Flüssigkeit 3 gesammelt und über einen weiteren Schlauch 12 an die Hochdruckpumpe 11 geführt, so daß sich die Flüssigkeit 3 in einem Kreislauf befindet. Die Förderrichtung der Hochdruckpumpe 11 ist in Fig. 1 durch einen nach oben gerichteten Pfeil markiert. Der Flüssigkeitsdruck im Inneren des Werkstücks ist so groß gewählt, daß die schwerkraftbedingte Krümmung des Strahls zwischen der Bohrung 2 und dem Auffanggefäß 13 vernachlässigbar ist. Gemäß einer bevorzugten Ausgestaltung ist der Flüssigkeitsruck in mehreren Stufen oder stufenlos einstellbar. Der Meßtisch 14 ist mittels eines nicht gezeigten Verstellmechanismusses dreidimensional translatorisch so verfahrbar, daß der Strahl 4 in das Sehfeld der CCD-Kamera 5 verfahrbar ist. Diese ist imstande, eine Abschnitt des Strahls 4 scharf als Strahlbild abzubilden.

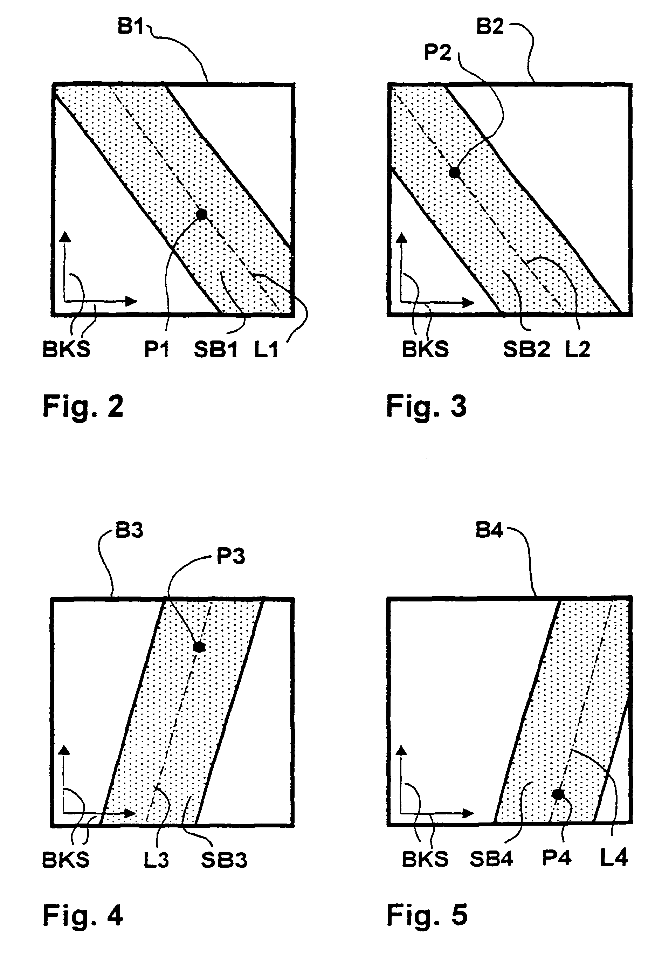

Die Figuren 2 bis 6 zeigen je ein von der CCD-Kamera von Fig. 1 geliefertes 2D-Bild, auf welchem jeweils ein Strahlbild abgebildet ist.

Fig. 2 zeigt ein von der CCD-Kamera 5 von Fig. 1 geliefertes erstes 2D-Bild B1. Die CCD-Kamera 5 ist eine solche mit einem eng begrenzten Tiefenschärfebereich, welcher sich in einer vorgegebenen, bekannten Entfernung von der CCD-Kamera 5 befindet. Diese ist gegenüber dem in Fig. 2 nicht dargestellten Werkstück so angeordnet, daß sich die CCD-Kamera 5 gegenüber dem Werkstück in einer ersten Relativposition und in einer ersten Relativorientierung befindet. Die erste Relativposition und die erste Relativorientierung sind so gewählt, daß sich ein Abschnitt des Strahls, im folgenden als erster Strahlabschnitt bezeichnet, im Tiefenschärfebereich und im Sehfeld der CCD-Kamera 5 befindet. Diese liefert daher als Abbildung ein erstes 2D-Bild B1, auf welchem der erste Strahlabschnitt scharf als erstes Strahlbild SB1 abgebildet ist. Im Beispiel von Fig. 2 ist der gesamte auf dem Bild B1 abgebildete Abschnitt des Strahls scharf abgebildet; dies ist jedoch keine notwendige Voraussetzung zur Durchführung des Verfahrens. Die Entfernung zwischen der CCD-Kamera 5 und dem scharf abgebildeten ersten Strahlabschnitt ist durch den Abstand zwischen der Sensoreinrichtung 5 und dem Tiefenschärfebereich gegeben.

Die erste Relativorientierung und die erste Relativposition werden gemessen bzw. mit Hilfe des Mehrkoordinatenmeßgerätes abgelesen. Auf der Längsachse L1 des ersten Strahlbildes SB1 wird ein Punkt P1 als Bezugspunkt, im folgenden als erster Bezugspunkt P1 bezeichnet, gewählt. Dessen Koordinaten im Bild-Koordinatensystem BKS, im folgenden als erste 2D-Koordinaten bezeichnet, werden gemessen.

Auf die von der CCD-Kamera gelieferte Abbildung, im vorliegenden Beispiel das Bild B1, ist ein zweidimensionales Bild-Koordinatensystem BKS bezogen. Auf die CCD-Kamera ist ein dreidimensionales Sensor-Koordinatensystem SKS bezogen (Fig. 1), welches vorzugsweise so gewählt ist, daß die X-Achse des Sensor-Koordinatensystem SKS mit der X-Achse des Bild-Koordinatensystems BKS und die Y-Achse des Sensor-Koordinatensystem SKS mit der Y-Achse des Bild-Koordinatensystems BKS zusammenfällt, wobei alle genannten Achsen dieselbe Skalierung aufweisen. Die Z-Koordinate des ersten Bezugspunktes P1 im Sensor-Koordinatensystem SKS ist in diesem Fall durch die bekannte Entfernung zwischen der CCD-Kamera und dem Tiefenschärfebereich gegeben.

Hierbei geht die Tiefe des Tiefenschärfebereichs als Meßunsicherheit in die Entfernungsbestimmung ein; diese Meßunsicherheit läßt sich jedoch sehr klein halten, indem von die CCD-Kamera mit einem Objektiv versehen wird, welches einen sehr kleinen Tiefenschärfebereich besitzt, oder indem die erste Relativorientierung so gewählt wird, daß sich ein Teil des abgebildeten Abschnitts Strahls vom Objektiv aus gesehen vor dem Tiefenschärfebereich, ein anderer Teil des abgebildeten Abschnitts des Strahls im Tiefenschärfebereich und ein weiterer Teil des abgebildeten Abschnitts des Strahls hinter dem Tiefenschärfebereich befindet, so daß das Zentrum des scharf abgebildeten Abschnitts des Strahls der Mitte des Tiefenschärfebereichs zugeordnet werden kann.

Aus den so gewonnenen Meßergebnissen kann nun die Lage des ersten Bezugspunktes P1 im Werkstück-Koordinatensystem WKS bestimmt werden, da aufgrund der bekannten ersten Relativposition und ersten Relativorientierung das Sensor-Koordinatensystem SKS in das Werkstück-Koordinatensystem WKS umgerechnet werden kann.

Selbstverständlich braucht der erste Bezugspunkt P1 nicht notwendigerweise auf der Längsachse L1 des ersten Strahlbildes SB1 zu liegen, sondern kann von dieser beabstandet sein; bei bekanntem Abstand des ersten Bezugspunktes von der Längsachse L1 kann nämlich die Lage des Fußpunktes des Lotes des ersten Bezugspunktes auf die Achse L1 berechnet werden.

Wenn die Lage von zwei Achsenpunkten des Strahls im Werkstück-Koordinatensystem WKS bekannt ist, können die Orientierung und die Lage des Strahls 4 im Werkstück-Koordinatensystem WKS und damit auch die Orientierung und Lage der Achse der Bohrung 2 im Werkstück-Koordinatensystem WKS bestimmt werden. Daher wird gemäß einer bevorzugten Variante die oben anhand von Fig. 2 erläuterte Vorgehensweise für einen anderen Bezugspunkt in entsprechender Weise wiederholt.

Die CCD-Kamera 5 wird hierzu gegenüber dem Werkstück 1 so angeordnet, daß sich die CCD-Kamera 5 gegenüber dem Werkstück 1 in einer zweiten Relativposition und in einer zweiten Relativorientierung befindet und ein zweiter Strahlabschnitt im Tiefenschärfebereich liegt, wobei die CCD-Kamera als Abbildung ein zweites 2D-Bild B2 liefert (Fig. 3), auf welchem der zweite Strahlabschnitt scharf als zweites Strahlbild SB2 abgebildet ist.

Die Entfernung zwischen der CCD-Kamera 5 und dem scharf abgebildeten zweiten Strahlabschnitt ist ebenfalls durch den bekannten Abstand zwischen der CCD-Kamera und dem Tiefenschärfebereich gegeben. Die zweite Relativorientierung wird vorteilhaft identisch zur ersten Relativorientierung gewählt, d.h. die CCD-Kamera 5 wird beim Übergang von der ersten zur zweiten Relativposition nicht verschwenkt. Die zweite Relativposition wird gemessen.

Auf der Längsachse L2 des zweiten Strahlbildes SB2 wird ein von dem ersten Bezugspunkt P1 beabstandeter zweiter Bezugspunkt P2 gewählt. Die Koordinaten des zweiten Bezugspunktes P2, im folgenden als zweite 2D-Koordinaten bezeichnet, werden im Bild-Koordinatensystem BKS gemessen. Damit ist die Lage des zweiten Bezugspunktes P2 im Sensor-Koordinatensystem SKS bekannt; da auch die zweite Relativposition und die zweite Relativorientierung bekannt sind, kann die Lage des zweiten Bezugspunktes P2 in Bezugspunktes P2 auf das Werkstück-Koordinatensystem WKS umgerechnet werden.

Durch den ersten und den zweiten Bezugspunkt P1,P2 ist die Lage des Strahls 4 im Raum festgelegt. Aus der Lage des ersten und des zweiten Bezugspunktes P1,P2 im Werkstück-Koordinatensystem WKS folgen daher durch lineare Extrapolation sofort die Orientierung und Lage der Achse der Bohrung 2 im Werkstück-Koordinatensystem WKS.

Auch der Durchmesser des Strahls 4 geht aus den Strahlbildern SB1 und SB2 hervor. Der Durchmesser des Strahls 4 folgt nämlich aus der Brennweite des Objektivs 6, der Breite des ersten oder des zweiten Strahlbildes SB1,SB2, d.h. der Ausdehnung der Strahlbilder SB1, SB2 senkrecht zur Längsachse L1 bzw. L2, sowie aus dem Abstand zwischen CCD-Kamera und dem scharf abgebildeten Abschnitt des Strahls, d.h. aus dem Abstand zwischen CCD-Kamera und dem Tiefenschärfebereich.

Damit sind der Durchmesser, die Orientierung und die Lage der Bohrung 2 erfindungsgemäß in Bezug auf das Werkstück-Koordinatensystem WKS bestimmt.

Die Orientierung und die Lage des Strahls im Werkstück-Koordinatensystem können auch ohne Kenntnis des Abstandes zwischen CCD-Kamera und dem Tiefenschärfebereich bestimmt werden. Hierzu werden gemäß einer Variante der Erfindung die Lage und Richtung der Projektion des Strahls auf mindestens zwei verschiedene Ebenen bestimmt wie folgt.

Die CCD-Kamera 5 und das Werkstück 1 werden relativ zueinander so angeordnet, daß sich die CCD-Kamera 5 gegenüber dem Werkstück 1 in einer dritten Relativposition und in einer dritten Relativorientierung befindet und die CCD-Kamera als Abbildung ein drittes 2D-Bild B3 (Fig. 4) liefert, auf welchem mindestens ein dritter Strahlabschnitt als drittes Strahlbild SB3 scharf abgebildet ist. Die optische Achse der CCD-Kamera 5, welche im vorliegenden Beispiel mit der Z-Achse des Sensor-Koordinatensystems SKS zusammenfällt, verläuft hierbei im Werkstück-Koordinatensystem WKS in einer ersten Raumrichtung, welche durch die dritte Relativorientierung bestimmt und daher bekannt ist. Nun wird die dritte Relativorientierung gemessen. Auf dem dritten 2D-Bild B3 wird ein auf der Längsachse L3 des dritten Strahlbildes SB3 gelegener dritter Bezugspunkt P3 ausgewählt (Fig. 4) und dessen Koordinaten, im folgenden als dritte 2D-Koordinaten bezeichnet, im Bild-Koordinatensystem WKS gemessen.

Nun wird die CCD-Kamera 5 so gegenüber dem Werkstück 1 verschoben, daß sich die CCD-Kamera 5 gegenüber dem Werkstück 1 in einer von der dritten Relativposition in axialer Richtung des Strahls 4 beabstandeten vierten Relativposition befindet und die CCD-Kamera als Abbildung ein viertes 2D-Bild B4 (Fig. 5) liefert, auf welchem mindestens ein vierter Strahlabschnitt als viertes Strahlbild SB4 scharf abgebildet ist. Die vierte Relativorientierung wird identisch zur dritten Relativorientierung gewählt, d.h. die CCD-Kamera 5 wird beim Übergang von der dritten zur vierten Relativposition nicht verschwenkt.

Die Lage der vierten Relativposition wird in Bezug auf die dritte Relativposition gemessen, d.h. es wird der Lageunterschied zwischen der dritten und der vierten Relativposition bestimmt. Auf dem vierten 2D-Bild B4 wird ein auf der Längsachse L4 des vierten Strahlbildes SB4 gelegener vierter Bezugspunkt P4 ausgewählt (Fig. 5) und dessen Koordinaten, im folgenden als vierte 2D-Koordinaten bezeichnet, im Bild-Koordinatensystem BKS gemessen.

Aus den so gewonnenen Meßergebnissen wird die Lage der Projektionen des dritten und des vierten Bezugspunktes P3,P4 auf eine zur ersten Raumrichtung senkrechte Ebene und hieraus die Lage und Richtung der Projektion des Strahls 4 auf diese Ebene im Werkstück-Koordinatensystem WKS bestimmt.

Diese Ergebnisse reichen zur Bestimmung der räumlichen Lage und der dreidimensionalen Orientierung des Strahls 4 noch nicht aus. Die oben unter Bezug auf Fig. 4 und Fig. 5 erläuterte Vorgehensweise wird daher mit jeweils veränderten Werten für die dritte und vierte Relativposition sowie die dritte Relativorientierung in entsprechender Weise erneut durchgeführt, wobei wiederum je Bezugspunkt auf der Achse jedes der so gewonnenen Strahlbilder ausgewählt wird; diese neuen Bezugspunkte werden in der Regel mit den Bezugspunkten P3 bzw. P4 selbstverständlich nicht zusammenfallen.

Auf diese Weise erhält man eine Projektion des Strahls 4 auf eine andere Ebene. Da nun die Projektionen des Strahls auf zwei verschiedene Ebenen bekannt sind, können die Orientierung und die Lage des Strahls im Werkstück-Koordinatensystem berechnet und hieraus die Lage und Orientierung der Achse der Bohrung 2 im Werkstück-Koordinatensystem (WKS) bestimmt werden. Hierzu braucht die Entfernung zwischen der CCD-Kamera 5 und ihrem Tiefenschärfebereich zur Bestimmung der Orientierung und Lage des Strahls 4 im Raum nicht herangezogen zu werden, d.h. diese Variante des Verfahrens ist auch ohne Kenntnis der genannten Entfernung durchführbar.

Gemäß einer anderen Variante der Erfindung, welche ebenfalls ohne Kenntnis des Abstandes zwischen CCD-Kamera und dem Tiefenschärfebereich durchführbar ist, werden die Orientierung und die Lage des Strahls im Werkstück-Koordinatensystem bestimmt wie folgt:

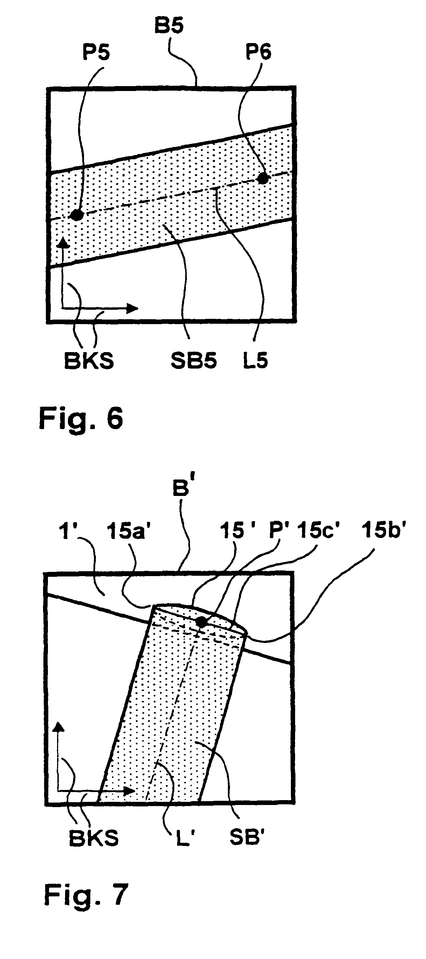

Zunächst wird die CCD-Kamera 5 gegenüber dem Werkstück 1 in einer fünften Relativposition und in einer fünften Relativorientierung so angeordnet, daß die CCD-Kamera 5 als Abbildung ein fünftes 2D-Bild B5 liefert, Fig. 6, auf welchem mindestens fünfter Strahlabschnitt als fünftes Strahlbild SB5 scharf abgebildet ist. Die optische Achse der CCD-Kamera 5 verläuft in diesem Fall im Werkstück-Koordinatensystem in einer zweiten Raumrichtung, welche durch die fünfte Relativorientierung bestimmt und daher bekannt ist. Die fünfte Relativorientierung wird gemessen. Die fünfte Relativposition braucht nicht gemessen zu werden.

Auf dem fünften 2D-Bild B5 werden ein fünfter und ein von diesem beabstandeter sechster Bezugspunkt P5,P6 gewählt, welche beide auf der Längsachse L5 des fünften Strahlbildes SB5 liegen (Fig. 6). Die Koordinaten des fünften und des sechsten Bezugspunktes P5,P6 werden jeweils im Bild-Koordinatensystem BKS gemessen.

Aus den so gewonnenen Meßergebnissen wird die Lage der Projektionen des fünften und des sechsten Bezugspunktes P5,P6 auf eine zur zweiten Raumrichtung senkrechte Ebene und hieraus die Lage und Richtung der Projektion des Strahls 4 auf diese Ebene im Werkstück-Koordinatensystem WKS bestimmt, was zur Bestimmung der räumlichen Lage und der dreidimensionalen Orientierung des Strahls 4 nicht ausreicht.

Die oben unter Bezug auf Fig. 6 erläuterte Vorgehensweise wird daher mit jeweils veränderten Werten für die fünfte Relativposition sowie die fünfte Relativorientierung in entsprechender Weise erneut durchgeführt, wobei wiederum zwei Bezugspunkte auf der Achse des der so gewonnenen Strahlbildes ausgewählt werden; diese neuen Bezugspunkte werden in der Regel mit den Bezugspunkten P5 bzw. P6 selbstverständlich nicht zusammenfallen.

Auf diese Weise erhält man eine Projektion des Strahls 4 auf eine andere Ebene, so daß nun die Orientierung und die Lage des Strahls 4 im Werkstück-Koordinatensystem WKS und hieraus die Lage und Orientierung der Achse der Bohrung 2 im Werkstück-Koordinatensystem WKS bestimmt werden können, ohne daß die Entfernung zwischen CCD-Kamera 5 und ihrem Tiefenschärfebereich bekannt zu sein braucht.

Selbstverständlich können die beiden letztgenannten Varianten so miteinander kombiniert werden, daß die Lage und Richtung der Projektion des Strahls 4 auf eine Ebene gemäß der einen Variante und die Lage und Richtung der Projektion des Strahls 4 auf andere Ebene gemäß der einen Variante bestimmt werden und die räumliche Orientierung und Lage des Strahls durch Kombination der so erhaltenen Ergebnisse bestimmt werden, wobei die Lage und Orientierung der Achse der Bohrung wiederum aus der Lage und Orientierung des Strahls folgen.

Eine bevorzugte Variante des Verfahrens wird im folgenden unter Bezug auf Fig. 7 erläutert. Gemäß diese Variante werden z.B. die dritte Relativposition und die dritte Relativorientierung so gewählt, daß man anstelle des dritten 2D-Bildes B3 von Fig. 4 ein 2D-Bild B3' (Fig. 7) erhält, auf welchem ein Teil der Auslaufkante der Bohrung 2 als Kurve 15' abgebildet ist. Gemäß dieser Variante wird also die Sensoreinrichtung auf den Strahlanfang und damit auf die Auslaufkante der Bohrung 2 selbst gerichtet. Anstelle des dritten Bezugspunktes P3 von Fig. 4 wird auf dem Bild B3' ein Bezugspunkt P3' gewählt, welcher mittig auf der Verbindungsgeraden 15c' der Enden 15a',15b' liegt. Die Lage des Schnittpunktes der Achse des Strahls 4 mit der Ebene der Auslaufkante im Werkstück-Koordinatensystem WKS wird nun als identisch mit der Lage des Bezugspunktes P3' im Werkstück-Koordinatensystem WKS angenommen.

Aus der Lage der Enden der Kurve 15' auf dem 2D-Bild B3' wird somit auf die Lage des Zentrums des Auslaufkante geschlossen. Damit kann erfindungsgemäß neben dem Durchmesser der Bohrung 2 und neben der Orientierung und Lage der Achse der Bohrung 2 auch die Lage der Bohrung 2 selbst bestimmt werden. Selbstverständlich kann die Relativposition zwischen CCD-Kamera 5 und Werkstück 1 als Spezialfall so gewählt werden, daß die Kurve 15' eine Gerade ist. In diesem Fall decken sich die Verbindungsgerade 15c' und die Kurve 15' auf dem Bild B'.

Das Bild B' an die Stelle jedes der Bilder B1 bis B5 (Fig1. bis Fig. 5) treten. Ebenso kann der auf dem Bild B' in der oben erläuterten Weise gewählte Bezugspunkt P' jeden der Bezugspunkte P1 bis P6 ersetzen. Dies bedeutet, die oben unter Bezug auf Fig. 2 bis Fig. 6 erläuterten Verfahren zur Bestimmung der Orientierung und Lage der Achse der Bohrung 2 können mit Hilfe der unter Bezug auf Fig. 7 erläuterten Variante so ergänzt werden, daß zusätzlich auch eine Bestimmung der Lage der Auslaufkante der Bohrung 2 im Werkstück-Koordinatensystem WKS erfolgt.

### Gewerbliche Anwendbarkeit:

Die Erfindung ist gewerblich anwendbar z.B. im Bereich der Herstellung von Einspritzdüsen für Verbrennungskraftmaschinen, insbesondere Motoren oder Turbinen.

### Liste der Bezugszeichen:

- 1: Werkstück
- 2: zylindrische Bohrung in 1
- 3: Medium
- 4: Strahl von 3
- 5: CCD-Kamera
- 6: Objektiv von 5
- 7: Mehrkoordinatenmeßgerät
- 8: Haltevorrichtung
- 9: Drehlagerung
- 10,12: Schläuche
- 11: Hochdruckpumpe
- 13: Auffanggefäß
- 14: Meßtisch
- 15': Kurve
- 15a',15b': Endpunkte von 15'
- 15c': Verbindungsgerade zwischen 15a' und 15b'
- BKS: Bild-Koordinatensystem
- B', B1-B6: 2D-Bilder
- L': Längsachse von SB'
- L1-L6: Längsachsen von SB1-SB6
- P', P1-P6: Bezugspunkte
- SB': Strahlbild in B'
- SB1-SB6: Strahlbilder in B1-B6
- SKS: Sensor-Koordinatensystem
- WKS: Werkstück-Koordinatensystem

## Patentansprüche

1. Verfahren zur Bestimmung des Durchmessers eines Lochs (2), insbesondere Aussparung oder Bohrung (2), in einem Werkstück (1), wobei das Loch (2) einseitig mit einem unter Druck stehenden Medium (3) beaufschlagt wird, so dass das Loch (2) von dem Medium (3) durchströmt wird und ein Strahl (4) des Mediums (3) nach Durchströmen des Lochs (2) aus demselben austritt,
**dadurch gekennzeichnet, dass** der Durchmesser des Lochs (2) aus dem Durchmesser des Strahls (4) bestimmt wird.

2. Verfahren nach Anspruch 1, **dadurch gekennzeichnet,**
**dass** auf das Werkstück (1) ein dreidimensionales Werkstück-Koordinatensystem (WKS) bezogen ist, wobei
- die Orientierung der Achse des Lochs (2) im Werkstück-Koordinatensystem (WKS) aus der Orientierung mindestens eines Abschnitts des Strahls (4) im Werkstück-Koordinatensystem (WKS) und/oder
- die Lage der Achse des Lochs (2) im Werkstück-Koordinatensystem (WKS) aus der Position mindestens eines Abschnitts des Strahls (4) im Werkstück-Koordinatensystem (WKS) sowie aus der Orientierung mindestens eines Abschnitts des Strahls (4) im Werkstück-Koordinatensystem (WKS) bestimmt wird.

3. Verfahren nach Anspruch 1 oder 2, **dadurch gekennzeichnet,**
**dass** zur Erfassung des Strahls (4) eine Sensoreinrichtung (5), insbesondere CCD-Kamera (5), verwendet wird, auf welche ein dreidimensionales Sensor-Koordinatensystem (SKS) bezogen ist, wobei die Sensoreinrichtung (5)
- eine optische Achse besitzt, deren Richtung, optische Achsenrichtung, im Sensor-Koordinatensystem (SKS) bekannt ist, und
- ein Objektiv (6) besitzt, mittels welchem die Sensoreinrichtung (5) eine zweidimensionale Abbildung (B',B1,B2,B3,B4,B5) liefert und in dieser mindestens einen Abschnitt des Strahls (4) als Strahlbild (SB1,SB2,SB3, SB4,SB5) scharf abzubilden imstande ist, und
- einen Sensor, insbesondere CCD-Matrix, besitzt, welcher die zweidimensionale Abbildung (B',B1,B2,B3,B4,B5) zweidimensional aufgelöst zu erfassen imstande ist,
wobei auf die zweidimensionale Abbildung (B',B1,82,B3,B4,B5) ein zweidimensionales Bild-Koordinatensystem (BKS) bezogen ist, dessen Orientierung in Bezug auf das Sensor-Koordinatensystem (SKS) bekannt ist oder gemessen wird.

4. Verfahren nach Anspruch 3, **dadurch gekennzeichnet,**
**dass** die Sensoreinrichtung (5) auf einen Abschnitt des Strahls (4) gerichtet wird und der Durchmesser des Strahls (4) aus dem Abbildungsmaßstab des Objektivs (6), der Breite des Strahlbildes (SB',SB1,SB2,SB3,SB4,SB5) sowie aus dem Abstand zwischen Sensoreinrichtung (5) und dem scharf abgebildeten Abschnitt des Strahls (4) bestimmt wird.

5. Verfahren nach Anspruch 4, **dadurch gekennzeichnet,**
**dass** der Abstand zwischen Sensoreinrichtung (5) und Strahl (4) aus der Bildweite des Strahlbildes (SB',SB1,SB2,SB3,SB4,SB5) bestimmt wird.

6. Verfahren nach Anspruch 4, **dadurch gekennzeichnet,**
**dass** der Abstand zwischen Sensoreinrichtung (5) und Strahl (4) mittels eines Laserabstandsmesssystems bestimmt wird.

7. Verfahren nach Anspruch 4, **dadurch gekennzeichnet,**
**dass** als Sensoreinrichtung (5) eine solche mit einem begrenzten Tiefenschärfebereich verwendet wird, welcher sich in einer vorgegebenen Entfernung von der Sensoreinrichtung (5) befindet, und diese gegenüber dem Werkstück (1) so angeordnet wird, dass sich die Sensoreinrichtung (5) gegenüber dem Werkstück (1) in einer ersten Relativposition und in einer ersten Relativorientierung befindet und ein Abschnitt des Strahls, erster Strahlabschnitt, im Tiefenschärfebereich liegt, wobei die Sensoreinrichtung (5) als Abbildung ein erstes 2D-Bild (B1) liefert, auf welchem der erste Strahlabschnitt scharf als erstes Strahlbild (SB1) abgebildet ist, so dass die Entfernung zwischen der Sensoreinrichtung (5) und dem scharf abgebildeten ersten Strahlabschnitt durch den Abstand zwischen der Sensoreinrichtung (5) und dem Tiefenschärfebereich gegeben ist.

8. Verfahren nach Anspruch 7, **dadurch gekennzeichnet, dass**
a) die erste Relativorientierung und erste Relativposition gemessen werden,
b) ein Punkt (P1) auf der Längsachse (L1) des ersten Strahlbildes (SB1) als Bezugspunkt, erster Bezugspunkt (P1), gewählt wird,
c) die Koordinaten des ersten Bezugspunktes (P1), erste 2D-Koordinaten, im Bild-Koordinatensystem (BKS) gemessen werden, und
d) aus den so gewonnenen Messergebnissen die Lage des ersten Bezugspunktes (P1) im Werkstück-Koordinatensystem (WKS) bestimmt wird.

9. Verfahren nach Anspruch 8, **dadurch gekennzeichnet,**
**dass** die Sensoreinrichtung (5) gegenüber dem Werkstück (1) so angeordnet wird, dass sich die Sensoreinrichtung (5) gegenüber dem Werkstück (1) in einer zweiten Relativposition und in einer zweiten Relativorientierung befindet und ein zweiter Strahlabschnitt im Tiefenschärfebereich liegt, wobei die Sensoreinrichtung (5) als Abbildung ein zweites 2D-Bild (B2) liefert, auf welchem der zweite Strahlabschnitt scharf als zweites Strahlbild (SB2) abgebildet ist, so dass die Entfernung zwischen der Sensoreinrichtung (5) und dem scharf abgebildeten zweiten Strahlabschnitt ebenfalls durch den Abstand zwischen der Sensoreinrichtung (5) und dem Tiefenschärfebereich gegeben ist, und
a) die zweite Relativorientierung und die zweite Relativposition gemessen werden,
b) auf der Längsachse (L2) des zweiten Strahlbildes (SB2) ein von dem ersten Bezugspunkt (P1) beabstandeter zweiter Bezugspunkt (P2) gewählt wird,
c) die Koordinaten des zweiten Bezugspunktes (P2), zweite 2D-Koordinaten, im Bild-Koordinatensystem (BKS) gemessen werden,
d) aus den so gewonnenen Messergebnissen die Lage des zweiten Bezugspunktes (P2) im Werkstück-Koordinatensystem (WKS) bestimmt wird, und
e) aus der Lage des ersten und des zweiten Bezugspunktes (P1,P2) im Werkstück-Koordinatensystem (WKS) die Orientierung und Lage der Achse des Lochs (2) im Werkstück-Koordinatensystem (WKS) bestimmt werden.

10. Verfahren nach einem der Ansprüche 3 bis 9, **gekennzeichnet durch** folgende Schritte:
a) die Sensoreinrichtung (5) und das Werkstück (1) werden relativ zueinander so angeordnet, dass sich die Sensoreinrichtung (5) gegenüber dem Werkstück (1) in einer dritten Relativposition und in einer dritten Relativorientierung befindet, wobei die Sensoreinrichtung (5) als Abbildung ein drittes 2D-Bild (B3) liefert, auf welchem mindestens ein dritter Strahlabschnitt als drittes Strahlbild (SB3) scharf abgebildet ist, und wobei die optische Achse der Sensoreinrichtung im Werkstück-Koordinatensystem (WKS) in einer ersten Raumrichtung verläuft, welche **durch** die dritte Relativorientierung bestimmt ist,
b) die dritte Relativorientierung wird gemessen,
c) auf dem dritten 2D-Bild (B3) wird ein auf der Längsachse (L3) des dritten Strahlbildes (SB3) gelegener dritter Bezugspunkt (P3) ausgewählt und dessen Koordinaten, dritte 2D-Koordinaten, im Bild-Koordinatensystem (BKS) gemessen,
d) die Sensoreinrichtung (5) und das Werkstück (1) werden relativ zueinander so angeordnet, dass sich die Sensoreinrichtung (5) gegenüber dem Werkstück (1) in einer von der dritten Relativposition in axialer Richtung des Strahls (4) beabstandeten vierten Relativposition, jedoch weiterhin in der dritten Relativorientierung befindet, wobei die Sensoreinrichtung (5) als Abbildung ein viertes 2D-Bild (B4) liefert, auf welchem mindestens ein vierter Strahlabschnitt als viertes Strahlbild (SB4) scharf abgebildet ist,
e) die Lage der vierten Relativposition wird in Bezug auf die dritte Relativposition gemessen,
f) auf dem vierten 2D-Bild (B4) wird ein auf der Längsachse (L4) des vierten Strahlbildes (SB4) gelegener vierter Bezugspunkt (P4) ausgewählt und dessen Koordinaten, vierte 2D-Koordinaten, im Bild-Koordinatensystem (BKS) gemessen,
g) aus den so gewonnenen Messergebnissen wird die Lage der Projektionen des dritten und des vierten Bezugspunktes (P3,P4) auf eine zur ersten Raumrichtung senkrechte Ebene und hieraus die Lage und Richtung der Projektion des Strahls (4) auf diese Ebene im Werkstück-Koordinatensystem (WKS) bestimmt.

11. Verfahren nach Anspruch 10, **dadurch gekennzeichnet, dass** die Schritte a) bis g) mit jeweils veränderten Werten für die dritte und vierte Relativposition sowie die dritte Relativorientierung erneut durchgeführt werden und aus den so erhaltenden Ergebnissen die Lage und Orientierung des Strahls (4) im Werkstück-Koordinatensystem (WKS) und hieraus die Orientierung und Lage der Achse des Lochs (2) im Werkstück-Koordinatensystem (WKS) bestimmt werden.

12. Verfahren nach einem der Ansprüche 3 bis 9, **gekennzeichnet durch** folgende Schritte:
a) die Sensoreinrichtung (5) und das Werkstück (1) werden relativ zueinander so angeordnet, dass sich die Sensoreinrichtung (5) gegenüber dem Werkstück (1) in einer fünften Relativposition und in einer fünften Relativorientierung befindet, wobei die Sensoreinrichtung (5) als Abbildung ein fünftes 2D-Bild (B5) liefert, auf welchem mindestens ein fünfter Strahlabschnitt als fünftes Strahlbild (SB5) scharf abgebildet ist, und wobei die optische Achse der Sensoreinrichtung (5) im Werkstück-Koordinatensystem in einer zweiten Raumrichtung verläuft, welche **durch** die fünfte Relativorientierung bestimmt ist,
b) die fünfte Relativorientierung wird gemessen,
c) auf dem fünften 2D-Bild (B5) werden ein fünfter und ein von diesem beabstandeter sechster Bezugspunkt (P5,P6) gewählt, welche beide auf der Längsachse (L5) des fünften Strahlbildes (SB5) liegen,
d) die Koordinaten des fünften und des sechsten Bezugspunktes (P5,P6) werden jeweils im Bild-Koordinatensystem (BKS) gemessen,
e) aus den so gewonnenen Messergebnissen wird die Lage der Projektionen des fünften und des sechsten Bezugspunktes (P5,P6) auf eine zur zweiten Raumrichtung senkrechte Ebene und hieraus die Lage und Richtung der Projektion des Strahls (4) auf diese Ebene im Werkstück-Koordinatensystem (WKS) bestimmt.

13. Verfahren nach Anspruch 12, **dadurch gekennzeichnet,**
**dass** die Schritte a) bis e) mit jeweils veränderten Werten für die fünfte Relativposition sowie die fünfte Relativorientierung erneut durchgeführt werden und aus den so erhaltenden Ergebnissen die Orientierung und Lage des Strahls (4) im Werkstück-Koordinatensystem (WKS) und hieraus die Orientierung und Lage der Achse des Lochs (2) im Werkstück-Koordinatensystem (WKS) bestimmt werden.

14. Verfahren nach Anspruch 10 und 12, **dadurch gekennzeichnet, dass** die erste und die zweite Raumrichtung nicht parallel zueinander gewählt werden und aus der Lage und Richtung der Projektion des Strahls (4) auf die zur ersten Raumrichtung senkrechte Ebene sowie aus der Lage und Richtung der Projektion des Strahls (4) auf die zur zweiten Raumrichtung senkrechte Ebene jeweils im Werkstück-Koordinatensystem (WKS) die Orientierung und Lage des Strahls (4) im Werkstück-Koordinatensystem (WKS) und hieraus die Orientierung und Lage der Achse des Lochs (2) im Werkstück-Koordinatensystem (WKS) bestimmt werden.

15. Verfahren nach einem der Ansprüche 8 bis 14, **dadurch gekennzeichnet, dass** .
a) die erste oder zweite oder dritte oder vierte oder fünfte oder sechste Relativposition und/oder die erste oder zweite oder dritte oder fünfte Relativorientierung so gewählt werden, dass auf dem ersten bzw. zweiten bzw. dritten bzw. vierten bzw. fünften bzw. sechsten 2D-Bild (B3') ein Teil der Auslaufkante des Lochs (2) als Kurve (15') abgebildet ist,
b) der erste oder zweite oder dritte oder vierte oder fünfte oder sechste Bezugspunkt (P3') auf der Verbindungsgeraden (15c') der Enden (15a',15b') mittig zwischen denselben gewählt wird, und
c) die Lage des Schnittpunktes der Achse des Strahls (4) mit der Ebene der Auslaufkante im Werkstück-Koordinatensystem (WKS) als identisch mit der Lage des ersten bzw. zweiten bzw. dritten bzw. vierten bzw. fünften bzw. sechsten Bezugspunktes (P3') im Werkstück-Koordinatensystem angenommen wird.

16. Verfahren nach einem der Ansprüche 1 bis 15, **dadurch gekennzeichnet, dass**
- zur Positionierung des Werkstücks (1) gegenüber der Sensoreinrichtung (5) ein Mehrkoordinatenmessgerät (7) verwendet wird, an welchem das Werkstück (1) angeordnet ist und mittels welchem dieses gegenüber der Sensoreinrichtung (5) dreidimensional translatorisch verfahrbar ist,
- oder zur Positionierung der Sensoreinrichtung (5) gegenüber dem Werkstück (1) ein Mehrkoordinatenmessgerät (7) verwendet wird, an welchem die Sensoreinrichtung (5) angeordnet ist und mittels welchem diese gegenüber dem Werkstück (1) dreidimensional translatorisch verfahrbar ist.

17. Verfahren nach einem der Ansprüche 1 bis 16, **dadurch gekennzeichnet, dass** das austretende Medium aufgefangen wird.

18. Verfahren nach einem der Ansprüche 1 bis 17, **dadurch gekennzeichnet, dass** das Werkstück (1) gegenüber der Sensoreinrichtung (5) so angeordnet und orientiert wird, dass der Strahl (4) in derjenigen Ebene verläuft, welche durch die X-Achse und die Y-Achse des Sensor-Koordinatensystems (SKS) aufgespannt wird.

19. Verfahren nach einem der Ansprüche 1 bis 18, **dadurch gekennzeichnet, dass** das Werkstück (1) ein Hohlkörper ist, welcher eine Mehrzahl von mit dem unter Druck stehenden Medium (3) beaufschlagten Löchern (2) aufweist, wobei zur Durchführung des Verfahrens alle bis auf eines der Löcher (2) verstopft oder verschlossen werden.

20. Verfahren nach einem der Ansprüche 1 bis 19, **dadurch gekennzeichnet, dass** das Medium (3) nach Durchströmen des Lochs (2) aufgefangen wird und sich in einem Kreislauf befindet.

21. Verfahren nach einem der Ansprüche 1 bis 20, **dadurch gekennzeichnet, dass** als Medium (3) eine Flüssigkeit oder ein Gas verwendet wird.

22. Verfahren nach Anspruch 21, **dadurch gekennzeichnet,**
**dass** eine in die Flüssigkeit eintauchende Lichtquelle dazu benutzt wird, den Strahl (4) unter Ausnutzung eines Lichtleitereffektes von innen zu beleuchten.

23. Verfahren nach Anspruch 21, **dadurch gekennzeichnet,**
**dass** als Medium (3) eine Flüssigkeit oder ein Gas verwendet wird, welcher bzw. welchem ein Farbstoff zugesetzt ist.

24. Verfahren nach Anspruch 21, **dadurch gekennzeichnet, dass** als Medium (3) eine luminiszente Flüssigkeit oder ein luminiszentes Gas verwendet wird.

25. Verfahren nach Anspruch 21, **dadurch gekennzeichnet,**
**dass** als Medium ein solches verwendet wird, welches sich vor Eintritt in das Loch (2) in flüssigem und nach Austritt aus dem Loch (2) in gasförmigem oder in einem aerosolartigen Zustand befindet.

26. Verfahren nach einem der Ansprüche 1 bis 25, **dadurch gekennzeichnet, dass** das Loch konusförmig (2) ausgebildet ist und aus dem Öffnungswinkel oder dem Verjüngungswinkel des Strahls, aus seinem Durchmesser an einer vorgegebenen Stelle und aus der Entfernung dieser Stelle von der Auslaufkante des Lochs (2) der Konuswinkel des Lochs sowie der Durchmesser derjenigen Fläche bestimmt werden, welche durch die Auslaufkante des Lochs (2) aufgespannt wird.

27. Verfahren nach einem der Ansprüche 1 bis 26, **dadurch gekennzeichnet, dass** das Verfahren im Vakuum durchgeführt wird.

28. Verfahren nach Anspruch 21, **dadurch gekennzeichnet,**
**dass** die Flüssigkeit oder das Gas gegenüber der Umgebungstemperatur erwärmt werden und als Sensoreinrichtung (5) eine solche verwendet wird, welche die Wärmestrahlung der Flüssigkeit bzw. des Gases zu erfassen imstande ist.

29. Vorrichtung zur Bestimmung des Durchmessers eines Lochs (2), insbesondere Aussparung oder Bohrung (2), in einem Werkstück (1), wobei das Loch (2) einseitig mit dem unter Druck stehenden Medium (3) so beaufschlagbar ist, dass das Loch (2) von dem Medium (3) durchströmt wird und ein Strahl (4) des Mediums (3) nach Durchströmen des Lochs (2) aus demselben austritt, **gekennzeichnet durch**
- einen Druckerzeuger, insbesondere Hochdruckpumpe (11), welcher imstande ist, ein Medium (3) unter Druck zu setzen und, und
- eine Sensoreinrichtung (5), insbesondere CCD-Kamera (5), mit einem Objektiv (6), mittels welchem die Sensoreinrichtung (5) eine zweidimensionale Abbildung (B',B1,B2,B3,B4,B5,B6) zu liefern und in dieser mindestens einen Abschnitt des Strahls (4) als Strahlbild (SB',SB1,SB2,SB3, SB4,SB5) scharf abzubilden imstande ist, und mit einem Sensor, insbesondere CCD-Matrix, welcher die zweidimensionale Abbildung (B',B1,B2, B3,B4,B5,B6) zweidimensional aufgelöst zu erfassen imstande ist,
so dass der Durchmesser des Strahls (4) mittels der Sensoreinrichtung (5) aus dem Abbildungsmaßstab des Objektivs (6), der Breite des Strahlbildes (SB',SB1, SB2,SB3,SB4,SB5) sowie aus dem Abstand zwischen Sensoreinrichtung (5) und dem scharf abgebildeten Abschnitt des Strahls (4) bestimmbar und der Durchmesser des Lochs (2) aus dem Durchmesser des Strahls (4) bestimmbar ist.

30. Vorrichtung nach Anspruch 29, **dadurch gekennzeichnet,**
**dass** auf das Werkstück (1) ein dreidimensionales Werkstück-Koordinatensystem (WKS) und auf die Sensoreinrichtung (5) ein dreidimensionales Sensor-Koordinatensystem (SKS) bezogen ist.

31. Vorrichtung nach Anspruch 29 oder 30, **dadurch gekennzeichnet, dass** die Sensoreinrichtung (5) eine solche mit einem begrenzten Tiefenschärfebereich ist.

32. Vorrichtung nach einem Ansprüche 29 bis 32, **dadurch gekennzeichnet,**
**dass** die Vorrichtung ein Laserabstandsmesssystem aufweist, mittels welchem die Entfernung zwischen der Sensoreinrichtung (5) und dem Strahl (4) messbar ist.

33. Vorrichtung nach einem der Ansprüche 29 bis 32, **dadurch gekennzeichnet, dass** die Vorrichtung ein Mehrkoordinatenmessgerät (7) aufweist, mittels welchem das Werkstück (1) gegenüber der Sensoreinrichtung (5) oder die Sensoreinrichtung (5) gegenüber dem Werkstück (1) dreidimensional translatorisch verfahrbar ist.

34. Vorrichtung nach einem der Ansprüche 29 bis 32, **dadurch gekennzeichnet, dass** das austretende Medium auffangbar ist.

35. Vorrichtung nach einem der Ansprüche 29 bis 34, **dadurch gekennzeichnet, dass** das Werkstück (1) gegenüber der Sensoreinrichtung (5) so angeordnet und orientiert ist, dass der Strahl (4) in derjenigen Ebene verläuft, welche durch die X-Achse und die Y-Achse des Sensor-Koordinatensystems (SKS) aufgespannt wird.

36. Vorrichtung nach einem der Ansprüche 33 oder 34, **dadurch gekennzeichnet, dass** das Mehrkoordinatenmessgerät (7) eine X-, eine Y- und eine Z-Verfahrachse aufweist und das Werkstück (1) gegenüber dem Mehrkoordinatenmessgerät (7) so angeordnet und orientiert ist, dass der Strahl (4) in derjenigen Ebene verläuft, welche durch die X-Verfahrachse und die Y-Verfahrachse des Mehrkoordinatenmessgerätes (7) aufgespannt wird.

37. Vorrichtung nach einem der Ansprüche 29 bis 36, **dadurch gekennzeichnet, dass** das Werkstück mittels einer Drehlagerung (9) um eine Achse drehbar gehaltert ist.

38. Vorrichtung nach Anspruch 37, **dadurch gekennzeichnet,**
**dass** das Werkstück (1) eine Einspritzdüse (1) für eine Verbrennungskraftmaschine ist und die Drehlagerung (9) so eingerichtet ist, dass diese eine Drehung der Einspritzdüse (1) um ihre Längsachse erlaubt.

39. Vorrichtung nach einem der Ansprüche 29 bis 38, **dadurch gekennzeichnet, dass** das Werkstück (1) ein Hohlkörper ist, welcher eine Mehrzahl von mit dem unter Druck stehenden Medium (3) beaufschlagten Löchern (2) aufweist, wobei mittels eines Sperrmechanismus alle bis auf eines der Löcher (2) verstopfbar oder verschließbar sind oder das austretende Medium auffangbar ist.

40. Vorrichtung nach einem der Ansprüche 29 bis 39, **dadurch gekennzeichnet, dass** die Vorrichtung ein oben offenes Auffanggefäß (13) aufweist, in dessen Inneres der Strahl (4) gerichtet ist und welches mit dem Druckerzeuger (11) so verbunden ist, dass das Medium nach Durchströmen des Lochs (2) in das Auffanggefäß (13), von dort zum Druckerzeuger (11) und von diesem wieder in das Loch (2) gelangt, so dass sich das Medium (3) in einem Kreislauf befindet.

41. Vorrichtung nach einem der Ansprüche 29 bis 40, **dadurch gekennzeichnet, dass** das Medium (3) eine Flüssigkeit oder ein Gas ist.

42. Vorrichtung nach Anspruch 41, **dadurch gekennzeichnet,**
**dass** die Vorrichtung eine in die Flüssigkeit eintauchende Lichtquelle aufweist, welche den Strahl (4) unter Ausnutzung eines Lichtleitereffektes von innen zu beleuchten imstande ist.

43. Vorrichtung nach Anspruch 41 oder 42, **dadurch gekennzeichnet,**
**dass** dem Medium (3) ein Farbstoff zugesetzt ist.

44. Vorrichtung nach Anspruch 41, **dadurch gekennzeichnet,**
**dass** das Medium (3) eine luminiszente Flüssigkeit oder ein luminiszentes Gas ist.

45. Vorrichtung nach Anspruch 41, **dadurch gekennzeichnet,**
**dass** die Flüssigkeit (3) oder das Gas gegenüber der Umgebungstemperatur mittels einer Heizung erwärmbar ist und die Sensoreinrichtung (5) die Wärmestrahlung der Flüssigkeit (3) bzw. des Gases zu erfassen imstande ist.

## Claims

1. A method for determining the diameter of a hole (2), especially a cutout or a bore (2), in a workpiece (1), whereby the hole (2) is exposed from one side to a medium (3) that is under pressure, so that the medium (3) flows through the hole (2) and a jet (4) of the medium (3) exits from the hole (2) after having flowed through it,
**characterized in that** the diameter of the hole (2) is determined on the basis of the diameter of the jet (4).

2. The method according to claim 1, **characterized in that** a three-dimensional workpiece coordinate system (WKS) is related to the workpiece (1), whereby
- the orientation of the axis of the hole (2) in the workpiece coordinate system (WKS) is determined on the basis of the orientation of at least one section of the jet (4) in the workpiece coordinate system (WKS), and/or
- the position of the axis of the hole (2) in the workpiece coordinate system (WKS) is determined on the basis of the position of at least one section of the jet (4) in the workpiece coordinate system (WKS) as well as on the basis of the orientation of at least one section of the jet (4) in the workpiece coordinate system (WKS).

3. The method according to claim 1 or 2, **characterized in that**,
in order to detect the jet (4), a sensor device (5), especially a CCD camera (5), is used to which a three-dimensional sensor coordinate system (SKS) is related, whereby the sensor device (5)
- has an optical axis whose direction, the optical axis direction, is known in the sensor coordinate system (SKS), and
- it has an objective lens (6) by means of which the sensor device (5) provides a two-dimensional image (B', B1, B2, B3, B4, B5) and, in this image, it is capable of sharply imaging at least one section of the jet (4) as a jet image (SB1, SB2, SB3, SB4, SB5), and
- it has a sensor, especially a CCD matrix, which is capable of detecting the two-dimensional image (B', B1, B2, B3, B4, B5) in a two-dimensionally resolved manner,
whereby a two-dimensional image coordinate system (BKS), whose orientation relative to the sensor coordinate system (SKS) is known or measured, is related to the two-dimensional image (B', B1, B2, B3, B4, B5).

4. The method according to claim 3, **characterized in that** the sensor device (5) is aimed at a section of the jet (4) and the diameter of the jet (4) is determined on the basis of the imaging scale of the objective lens (6), on the basis of the width of the jet image (SB', SB1, SB2, SB3, SB4, SB5) as well as on the basis of the distance between the sensor device (5) and the sharply imaged section of the jet (4).

5. The method according to claim 4, **characterized in that** the distance between the sensor device (5) and the jet (4) is determined on the basis of the image distance of the jet image (SB', SB1, SB2, SB3, SB4, SB5).

6. The method according to claim 4, **characterized in that** the distance between the sensor device (5) and the jet (4) is determined by means of a laser distance measuring system.

7. The method according to claim 4, **characterized in that** the sensor device (5) employed is one with a limited depth of field range, which is at a prescribed distance from the sensor device (5), and this sensor device (5) is arranged vis-à-vis the workpiece (1) in such a way that the sensor device (5) is in a first relative position and in a first relative orientation vis-à-vis the workpiece (1), and a section of the jet, the first jet section, lies in the depth of field range, whereby the sensor device (5) provides a first 2D image (B1) as the image, on which the first jet section is sharply imaged as the first jet image (SB1), so that the distance between the sensor device (5) and the sharply imaged first jet section is defined by the distance between the sensor device (5) and the depth of field range.

8. The method according to claim 7, **characterized in that**
a) the first relative orientation and the first relative position are measured,
b) a point (P1) on the longitudinal axis (L1) of the first jet image (SB1) is selected as the reference point, the first reference point (P1),
c) the coordinates of the first reference point (P2), the first 2D coordinates, in the image coordinate system (BKS) are measured, and
d) the position of the first reference point (P1) in the workpiece coordinate system (WKS) is determined on the basis of the measured results thus obtained.

9. The method according to claim 8, **characterized in that** the sensor device (5) is arranged vis-à-vis the workpiece (1) in such a way that the sensor device (5) is in a second relative position and in a second relative orientation vis-à-vis the workpiece (1), and a second jet section lies in the depth of field range, whereby the sensor device (5) provides a second 2D image (B2) as the image, on which the second jet section is sharply imaged as the second jet image (SB2), so that the distance between the sensor device (5) and the sharply imaged second jet section is likewise defined by the distance between the sensor device (5) and the depth of field range, and
a) the second relative orientation and the second relative position are measured,
b) a second reference point (P2), which is at a distance from the first reference point (P1), is selected on the longitudinal axis (L2) of the second jet image (SB2),
c) the coordinates of the second reference point (P1), the second 2D coordinates, in the image coordinate system (BKS) are measured, and
d) the position of the second reference point (P2) in the workpiece coordinate system (WKS) is determined on the basis of the measured results thus obtained, and
e) the orientation and the position of the axis of the hole (2) in the workpiece coordinate system (WKS) is determined on the basis of the position of the first and second reference points (P1, P2) in the workpiece coordinate system (WKS).

10. The method according to one of claims 3 to 9, **characterized by** the following steps:
a) the sensor device (5) and the workpiece (1) are positioned relative to each other in such a way that the sensor device (5) is in a third relative position and in a third relative orientation vis-à-vis the workpiece (1), whereby the sensor device (5) provides a third 2D image (B3) as the image, on which at least a third jet section is sharply imaged as the third jet image (SB3), and whereby the optical axis of the sensor device runs in the workpiece coordinate system (WKS) in a first spatial direction that is determined by the third relative orientation,
b) the third relative orientation is measured,
c) on the third 2D image (B3), a third reference point (P3) located on the longitudinal axis (L3) of the third jet image (SB3) is selected, and its coordinates, the third 2D coordinates, in the image coordinate system (BKS) are measured,
d) the sensor device (5) and the workpiece (1) are arranged relative to each other in such a way that the sensor device (5) is located vis-à-vis the workpiece (1) in a fourth relative position that is at a distance from the third relative position in the axial direction of the jet (4), but continues to be in the third relative orientation, whereby the sensor device (5) provides a fourth 2D image (B4) as the image, on which at least a fourth jet section is sharply imaged as the fourth jet image (SB4),
e) the position of the fourth relative position relative to the third relative position is measured,
f) on the fourth 2D image (B4), a fourth reference point (P4) located on the longitudinal axis (L4) of the fourth jet image (SB4) is selected, and its coordinates, the fourth 2D coordinates, in the image coordinate system (BKS) are measured,
g) on the basis of the measured results thus obtained, the position of the projections of the third and fourth reference points (P3, P4) onto a plane that is perpendicular to the first spatial direction is determined, and on the basis of this, the position and direction of the projection of the jet (4) onto this plane in the workpiece coordinate system (WKS) is determined.

11. The method according to claim 10, **characterized in that** steps a) through g), each with changed values for the third and fourth relative positions as well as for the third relative orientation, are carried out once again and, on the basis of the results thus obtained, the position and the orientation of the jet (4) in the workpiece coordinate system (WKS) are determined, and on the basis of this, the orientation and the position of the axis of the hole (2) in the workpiece coordinate system (WKS) are determined.

12. The method according to one of claims 3 to 9, **characterized by** the following steps:
a) the sensor device (5) and the workpiece (1) are positioned relative to each other in such a way that the sensor device (5) is in a fifth relative position and in a fifth relative orientation vis-à-vis the workpiece (1), whereby the sensor device (5) provides a fifth 2D image (B5) as the image, on which at least a fifth jet section is sharply imaged as the fifth jet image (SB5), and whereby the optical axis of the sensor device (5) runs in the workpiece coordinate system in a second spatial direction that is determined by the fifth relative orientation,
b) the fifth relative orientation is measured,
c) on the fifth 2D image (B5), a fifth reference point (P5) and a sixth reference point (P6) that is at a distance from the fifth reference point (P5) are selected, which are both located on the longitudinal axis (L5) of the fifth jet image (SB5),
d) the coordinates of the fifth and of the sixth reference points (P5, P6) in the image coordinate system (BKS) are each measured,
e) on the basis of the measured results thus obtained, the position of the projections of the fifth and sixth reference points (P5, P6) onto a plane that is perpendicular to the second spatial direction is determined, and on the basis of this, the position and direction of the projection of the jet (4) onto this plane in the workpiece coordinate system (WKS) are determined.

13. The method according to claim 12, **characterized in that** steps a) through e), each with changed values for the fifth relative position as well as for the fifth relative orientation, are carried out once again and, on the basis of the results thus obtained, the orientation and the position of the jet (4) in the workpiece coordinate system (WKS) are determined, and on the basis of this, the orientation and the position of the axis of the hole (2) in the workpiece coordinate system (WKS) are determined.

14. The method according to claims 10 and 12, **characterized in that** the first and the second spatial directions are selected so as not to be parallel to each other and, on the basis of the position and direction of the projection of the jet (4) onto the plane that is perpendicular to the first spatial direction, as well as on the basis of the position and direction of the projection of the jet (4) onto the plane that is perpendicular to the second spatial direction - each in the workpiece coordinate system (WKS) - the orientation and position of the jet (4) in the workpiece coordinate system (WKS) are determined, and on the basis of this, the orientation and position of the axis of the hole (2) in the workpiece coordinate system (WKS) are determined.

15. The method according to one of claims 8 to 14, **characterized in that**
a) the first or second or third or fourth or fifth or sixth relative positions and/or the first or second or third or fifth relative orientations are selected in such a way that part of the outlet edge of the hole (2) is imaged as a curve (15') on the first or second or third or fourth or fifth or sixth 2D image (B3'),
b) the first or second or third or fourth or fifth or sixth reference point (P3') is selected on the connection straight line (15c") of the ends (15a', 15b') in the middle between them, and
c) the position of the intersection point of the axis of the jet (4) with the plane of the outlet edge in the workpiece coordinate system (WKS) is assumed to be identical to the position of the first or second or third or fourth or fifth or sixth reference point (P3') in the workpiece coordinate system.

16. The method according to one of claims 1 to 15, **characterized in that**
- in order to position the workpiece (1) vis-à-vis the sensor device (5), a multi-coordinate measuring device (7) is used on which the workpiece (1) is arranged and by means of which it can be moved three-dimensionally translatorily vis-à-vis the sensor device (5),
- or in order to position the sensor device (5) vis-à-vis the workpiece (1), a multi-coordinate measuring device (7) is used on which the sensor device (5) is arranged and by means of which it can be moved three-dimensionally translatorily vis-à-vis the workpiece (1).

17. The method according to one of claims 1 to 16, **characterized in that** the exiting medium is collected.

18. The method according to one of claims 1 to 17, **characterized in that** the workpiece (1) is arranged and oriented vis-à-vis the sensor device (5) in such a way that the jet (4) runs in the plane that is spanned by the x-axis and the y-axis of the sensor coordinate system (SKS).

19. The method according to one of claims 1 to 18, **characterized in that** the workpiece (1) is a hollow body having a plurality of holes (2) that are exposed to a medium (3) that is under pressure, whereby, in order to carry out the method, all of the holes (2), except for one, are blocked or closed.

20. The method according to one of claims 1 to 19, **characterized in that** the medium (3) is collected after is has flowed through the hole (2) and it circulates.

21. The method according to one of claims 1 to 20, **characterized in that** a liquid or a gas is used as the medium (3).

22. The method according to claim 21, **characterized in that** a light source that is immersed into the liquid is used to illuminate the jet (4) from the inside by utilizing a light-conducting effect.

23. The method according to claim 21, **characterized in that** a liquid or a gas to which a dye has been added is used as the medium (3).

24. The method according to claim 21, **characterized in that** a luminescent liquid or a luminescent gas is used as the medium (3).

25. The method according to claim 21, **characterized in that** the medium used is one that, before entering the hole (2), is in the liquid state and, after leaving the hole (2), is in the gaseous state or in an aerosol state.

26. The method according to one of claims 1 to 25, **characterized in that** the hole (2) is configured to be cone-shaped and the cone angle of the hole as well as the diameter of the surface that is spanned by the outlet edge of the hole (2) is determined on the basis of the opening angle or the tapering angle of the jet, on the basis of its diameter at a prescribed place and on the basis of the distance between this place and the outlet edge of the hole (2).

27. The method according to one of claims 1 to 26, **characterized in that** the method is carried out in a vacuum.

28. The method according to claim 21, **characterized in that** the liquid or the gas is heated up above the ambient temperature, and the sensor device (5) used is one that is capable of detecting the heat radiation of the liquid or of the gas.

29. A device for determining the diameter of a hole (2), especially a cutout or a bore (2), in a workpiece (1), whereby the hole (2) is exposed from one side to a medium (3) that is under pressure, so that the medium (3) flows through the hole (2) and a jet (4) of the medium (3) exits from the hole (2) after having flowed through it, **characterized by**
- a pressure generator, especially a high-pressure pump (11), that is capable of pressurizing a medium (3), and
- a sensor device (5), especially a CCD camera (5), with an objective lens (6) by means of which the sensor device (5) is capable of providing a two-dimensional image (B', B1, B2, B3, B4, B5) and, in this image, it is capable of sharply imaging at least one section of the jet (4) as a jet image (SB', SB1, SB2, SB3, SB4, SB5), and with a sensor, especially a CCD matrix, which is capable of detecting the two-dimensional image (B', B1, B2, B3, B4, B5) in a two-dimensionally resolved manner,
so that the diameter of the jet (4) can be determined by means of the sensor device (5) on the basis of the imaging scale of the objective lens (6), on the basis of the width of the jet image (SB', SB1, SB2, SB3, SB4, SB5), as well as on the basis of the distance between the sensor device (5) and the sharply imaged section of the jet (4), and the diameter of the hole (2) can be determined on the basis of the diameter of the jet (4).

30. The device according to claim 29, **characterized in that** a three-dimensional workpiece coordinate system (WKS) is related to the workpiece (1), and a three-dimensional sensor coordinate system (SKS) is related to the sensor device (5).

31. The device according to claim 29 or 30, **characterized in that** the sensor device (5) employed is one with a limited depth of field range.

32. The device according to one of claims 29 to 32, **characterized in that** the device has a laser distance measuring system by means of which the distance between the sensor device (5) and the jet (4) can be measured.

33. The device according to one of claims 29 to 32, **characterized in that** the device has a multi-coordinate measuring device (7) by means of which the workpiece (1) can be moved three-dimensionally translatorily vis-à-vis the sensor device (5), or the sensor device (5) can be moved three-dimensionally translatorily vis-à-vis the workpiece (1).

34. The device according to one of claims 29 to 32, **characterized in that** the exiting medium can be collected.

35. The device according to one of claims 29 to 34, **characterized in that** the workpiece (1) is arranged and oriented vis-à-vis the sensor device (5) in such a way that the jet (4) runs in the plane that is spanned by the x-axis and the y-axis of the sensor coordinate system (SKS).

36. The device according to one of claims 33 or 34, **characterized in that** the multi-coordinate measuring device (7) has an x-, a y-, and a z-movement axis, and the workpiece (1) is arranged and oriented vis-à-vis the multi-coordinate measuring device (7) in such a way that the jet (4) runs in the plane that is spanned by the x-movement axis and the y-movement axis of the multi-coordinate measuring device (7).

37. The device according to one of claims 29 to 36, **characterized in that** the workpiece is mounted rotatably around an axis by means of a rotary bearing (9).

38. The device according to claim 37, **characterized in that** the workpiece (1) is an injection nozzle (1) for an internal combustion engine and the rotary bearing (9) is configured in such a way that it allows a rotation of the injection nozzle (1) around its longitudinal axis.

39. The device according to one of claims 29 to 38, **characterized in that** the workpiece (1) is a hollow body having a plurality of holes (2) that are exposed to a medium (3) that is under pressure, whereby all of the holes (2), except for one, can be blocked or closed by means of a blocking mechanism, or the exiting medium can be collected.

40. The device according to one of claims 29 to 39, **characterized in that** the device has a collecting container (13) which is open towards the top, into whose interior the jet (4) is aimed, and which is connected to the pressure generator (11) in such a way that, after the medium has flowed through the hole (2), it enters the collecting container (13), goes from there to the pressure generator (11), and from there back into the hole (2), so that the medium (3) circulates.

41. The device according to one of claims 29 to 40, **characterized in that** the medium (3) is a liquid or a gas.

42. The device according to claim 41, **characterized in that** the device has a light source that is immersed into the liquid and that is capable of illuminating the jet (4) from the inside by utilizing a light-conducting effect.

43. The device according to claim 41 or 42, **characterized in that** a dye is added to the medium (3).

44. The device according to claim 41, **characterized in that** the medium (3) is a luminescent liquid or a luminescent gas.

45. The device according to claim 41, **characterized in that** the liquid (3) or the gas can be heated up above the ambient temperature, and the sensor device (5) is capable of detecting the heat radiation of the liquid (3) or of the gas.

## Revendications

1. Procédé de mesure du diamètre d'un trou (2), en particulier un évidement ou un perçage (2) dans une pièce à usiner (1), dans lequel le trou est alimenté d'un côté par un médium (3) se trouvant sous pression, de sorte que le médium (3) passe à travers le trou (2) et qu'un jet (4) du médium (3) sort du trou (2) après être passé au travers de celui-ci,
**caractérisé en ce que** le diamètre du trou (2) est déterminé à partir du diamètre du jet (4).

2. Procédé selon la revendication 1, **caractérisé en ce que** un système de coordonnées de la pièce à usiner (WKS) tridimensionnel se rapporte à la pièce à usiner (1), dans lequel
- l'orientation de l'axe du trou (2) dans le système de coordonnées de la pièce à usiner (WKS) est déterminée à partir de l'orientation d'au moins un segment du jet (4) dans le système de coordonnées de la pièce à usiner (WKS) et/ou
- la position de l'axe du trou (2) dans le système de coordonnées de la pièce à usiner (WKS) est déterminée à partir de la position d'au moins un segment du jet (4) dans le système de coordonnées de la pièce à usiner (WKS), ainsi qu'à partir de l'orientation d'au moins un segment du jet (4) dans le système de coordonnées de la pièce à usiner (WKS).

3. Procédé selon la revendication 1 ou 2, **caractérisé en ce que** l'on utilise pour la capture du jet (4) un dispositif sensoriel (5), en particulier une caméra CCD (5), à laquelle se rapporte un système de coordonnées sensorielles (SKS) tridimensionnel, lequel dispositif sensoriel (5)
- possède un axe optique dont le sens, ou sens de l'axe, est connu dans le système de coordonnées sensorielles (SKS), et
- possède un objectif (6) au moyen duquel le dispositif sensoriel (5) fournit une reproduction bidimensionnelle (B',B1,B2,B3,B4,B5) et est en mesure de reproduire avec netteté dans cette reproduction au moins un segment du jet (4) comme image du jet (SB1,SB2,SB3,SB4,SB5), et
- possède un capteur, en particulier une matrice CCD, qui est en mesure de capter la reproduction bidimensionnelle (B',B1,B2,B3,B4,B5) en une résolution bidimensionnelle,
et dans lequel un système de coordonnées de l'image (BKS) bidimensionnel se rapporte à la reproduction bidimensionnelle (B',B1,B2,B3,B4,B5), système dont l'orientation est connue ou mesurée par rapport au système de coordonnées sensorielles (SKS).

4. Procédé selon la revendication 3, **caractérisé en ce que** le dispositif sensoriel (5) est dirigé sur un segment du jet (4) et que le diamètre du jet (4) est déterminé à partir de l'échelle de reproduction de l'objectif (6), de la largeur de l'image du jet (SB',SB1,SB2,SB3,SB4,SB5), ainsi que de l'écart entre le dispositif sensoriel (5) et le segment du jet (4) reproduit avec netteté.

5. Procédé selon la revendication 4, **caractérisé en ce que** l'écart entre le dispositif sensoriel (5) et le jet (4) est déterminé à partir de la distance focale de l'image de l'image du jet (SB',SB1,SB2,SB3,SB4,SB5).

6. Procédé selon la revendication 4, **caractérisé en ce que**,
l'écart entre le dispositif sensoriel (5) et le jet (4) est déterminé au moyen d'un système laser de mesure de l'écart.

7. Procédé selon la revendication 4, **caractérisé en ce que**,
le dispositif sensoriel utilisé (5) est un dispositif ayant une zone de profondeur de champ limitée qui se trouve à une distance prédéfinie du dispositif sensoriel (5) et ledit dispositif sensoriel est disposé par rapport à la pièce à usiner (1) de sorte qu'il se trouve dans une première position relative et dans une première orientation relative et qu'un segment du jet, ou premier segment du jet, se situe dans la zone de profondeur de champ, le dispositif sensoriel (5) fournissant comme reproduction une première image 2D (B1) sur laquelle le premier segment du jet est reproduit avec netteté comme première image du jet (SB1), de sorte que la distance entre le dispositif sensoriel (5) et le premier segment du jet reproduit avec netteté est donnée par l'écart entre le dispositif sensoriel (5) et la zone de profondeur du champ.

8. Procédé selon la revendication 7, **caractérisé en ce que**
a) la première orientation relative et la première position relative sont mesurées,
b) un point (P1) est choisi sur l'axe longitudinal (L1) de la première image du jet (SB1) en tant que point de référence, ou premier point de référence (P1),
c) les coordonnées du premier point de référence (P1), ou premières coordonnées 2D, sont mesurées dans le système de coordonnées de l'image (BKS), et
d) à partir des résultats ainsi obtenus, la position du premier point de référence (P1) est déterminée dans le système de coordonnées de la pièce à usiner (WKS).

9. Procédé selon la revendication 8, **caractérisé en ce que** le dispositif sensoriel (5) est disposé par rapport à la pièce à usiner (1) de sorte que le dispositif sensoriel (5) se trouve dans une deuxième position relative et une deuxième orientation relative par rapport à la pièce à usiner (1) et qu'un deuxième segment de jet se situe dans la zone de profondeur de champ, le dispositif sensoriel (5) fournissant comme reproduction une deuxième image 2D (B2), sur laquelle le deuxième segment de jet est reproduit avec netteté comme deuxième image du jet (SB2), de sorte que la distance entre le dispositif sensoriel (5) et le deuxième segment de jet reproduit avec netteté est également donné par l'écart entre le dispositif sensoriel (5) et la zone de profondeur de champ, et que
a) la deuxième orientation relative et la deuxième position relative sont mesurées,
b) un deuxième point de référence (P2) espacé par rapport au premier point de référence (P1) est choisi sur l'axe longitudinal (L2) de la deuxième image du jet (SB2),
c) les coordonnées du deuxième point de référence (P2), ou deuxièmes coordonnées 2D, sont mesurées dans le système de coordonnées de l'image (BKS),
d) à partir des résultats ainsi obtenus, la position du deuxième point de référence (P2) est déterminée dans le système de coordonnées de la pièce à usiner (WKS), et
e) l'orientation et la position de l'axe du trou (2) sont déterminées dans le système de coordonnées de la pièce à usiner (WKS) sont déterminées à partir de la position du premier et du deuxième point de référence (P1,P2) dans le système de coordonnées de la pièce à usiner (WKS).

10. Procédé selon l'une des revendications 3 à 9, **caractérisé par** les étapes suivantes :
a) le dispositif sensoriel (5) et la pièce à usiner (1) sont disposés de façon relative l'un par rapport à l'autre de sorte que le dispositif sensoriel (5) se trouve dans une troisième position relative et dans une troisième orientation relative par rapport à la pièce à usiner (1), le dispositif sensoriel (5) fournissant comme reproduction une troisième image 2D (B3) sur laquelle au moins un troisième segment de jet est reproduit avec netteté comme troisième image de jet (SB3), et l'axe optique du dispositif sensoriel ayant un tracé dans le système de coordonnées de la pièce à usiner (WKS) dans une première direction dans l'espace qui est déterminée par l'orientation relative,
b) la troisième orientation relative est mesurée,
c) un troisième point de référence (P3) situé sur l'axe longitudinal (L3) de la troisième image du jet (SB3) est choisi sur la troisième image 2D (B3) et les coordonnées dudit point, ou troisièmes coordonnées 2D, sont mesurées dans le système de coordonnées de l'image (BKS),
d) le dispositif sensoriel (5) et la pièce à usiner (1) sont disposés de façon relative l'un par rapport à l'autre de sorte que le dispositif sensoriel (5) se trouve par rapport à la pièce à usiner (1) dans une quatrième position relative espacée de la troisième position relative dans le sens axial du jet, mais se trouve toujours dans la troisième orientation relative, le dispositif sensoriel (5) fournissant comme reproduction une quatrième image 2D (B4) sur laquelle au moins un quatrième segment du jet est reproduit avec netteté comme quatrième image du jet (SB4),
e) la position de la quatrième position relative est mesurée par rapport à la troisième position relative,
f) un quatrième point de référence (P4) situé sur l'axe longitudinal (L4) de la quatrième image du jet (SB4) est choisi sur la quatrième image 2D (B4) et les coordonnées dudit point, ou quatrièmes coordonnées 2D, sont mesurées dans le système de coordonnées de l'image (BKS),
g) à partir des résultats ainsi obtenus, la position des projections du troisième et du quatrième point de référence (P3,P4) est déterminée sur un plan vertical à la première direction dans l'espace, et, partant, la position et l'orientation de la projection du jet (4) sur ce plan dans le système de coordonnées de la pièce à usiner (WKS).

11. Procédé selon la revendication 10, **caractérisé en ce que** les étapes a) à g) sont à nouveau effectuées avec des valeurs respectivement modifiées pour la troisième et la quatrième position relative ainsi que pour la troisième orientation relative et, à partir des résultats ainsi obtenus, la position et l'orientation du jet (4) est déterminée dans le système de coordonnées de la pièce à usiner (WKS), et, partant, l'orientation et la position de l'axe du trou (2) dans le système de coordonnées de la pièce à usiner (WKS).

12. Procédé selon l'une des revendications 3 à 9, **caractérisé par** les étapes suivantes :
a) le dispositif sensoriel (5) et la pièce à usiner (1) sont disposés de façon relative l'un par rapport à l'autre de sorte que le dispositif sensoriel (5) se trouve dans une cinquième position relative et dans une cinquième orientation relative, le dispositif sensoriel (5) fournissant comme reproduction une cinquième image 2D (B5) sur laquelle au moins un cinquième segment de jet est reproduit avec netteté comme cinquième image du jet (SB5) et l'axe optique du dispositif sensoriel (5) ayant un tracé dans le système de coordonnées de la pièce à usiner dans une deuxième direction dans l'espace qui est déterminée par la cinquième orientation relative.
b) la cinquième orientation relative est mesurée,
c) un cinquième point de référence (P5) et un sixième point de référence (P6) espacé du cinquième sont choisis sur la cinquième image 2D (B5), lesquels points sont tous deux situés sur l'axe de référence (L5) de la cinquième image du jet (SB5),
d) les coordonnées respectives du cinquième et du sixième point de référence (P5,P6) sont respectivement mesurées dans le système de coordonnées de l'image (BKS),
e) à partir des résultats ainsi obtenus, la position des projections du cinquième et du sixième point de référence (P5,P6) est déterminée sur un deuxième plan vertical à la deuxième direction dans l'espace, et partant, la position et la direction de la projection du jet (4) sur ce plan dans le système de coordonnées de la pièce à usiner (WKS).

13. Procédé selon la revendication 12, **caractérisé en ce que** les étapes a) à e) sont à nouveau effectuées avec des valeurs respectivement modifiées pour la cinquième position relative ainsi que pour la cinquième orientation relative et, à partir des résultats ainsi obtenus, l'orientation et la position du jet (4) sont déterminées dans le système de coordonnées de la pièce à usiner (WKS) et, partant, l'orientation et la position de l'axe du trou (2) dans le système de coordonnées de la pièce à usiner (WKS).

14. Procédé selon les revendications 10 et 12, **caractérisé en ce que** la première et la deuxième direction dans l'espace ne sont pas choisies parallèlement l'une à l'autre et, à partir de la position et du sens de la projection du jet (4) sur le plan vertical à la première direction dans l'espace, ainsi qu'à partir de la position et du sens de la projection du jet (4) sur le plan vertical à la deuxième direction dans l'espace, on détermine respectivement dans le système de coordonnées de la pièce à usiner (WKS) l'orientation et la position respectives du jet (4) dans le système de coordonnées de la pièce à usiner (WKS), et, partant, l'orientation et la position de l'axe du trou (2) dans le système de coordonnées de la pièce à usiner (WKS).

15. Procédé selon l'une des revendications 8 à 14, **caractérisé en ce que**
a) la première ou la deuxième ou la troisième ou la quatrième ou la cinquième ou la sixième position relative et/ou la première ou la deuxième ou la troisième ou la quatrième ou la cinquième ou la sixième orientation relative sont choisies de sorte qu'une partie du bord de la sortie du trou (2) est reproduite sous forme de courbe (15') sur la première ou la deuxième ou la troisième ou la quatrième ou la cinquième ou la sixième image 2D (B3'),
b) le premier ou le deuxième ou le troisième ou le quatrième ou le cinquième ou le sixième point de référence (P3') est choisi sur les droites de jonction (15c') des terminaisons (15a',15b'), centré entre celles-ci, et
c) la position du point d'intersection de l'axe du jet (4) avec le plan du bord de la sortie dans le système de coordonnées de la pièce à usiner (WKS) est supposée identique à la position du premier ou du deuxième ou du troisième ou du quatrième ou du cinquième ou du sixième point de référence (P3') dans le système de coordonnées de la pièce à usiner.

16. Procédé selon l'une des revendications 1 à 15, **caractérisé en ce que**
- pour positionner la pièce à usiner (1) par rapport au dispositif sensoriel (5), on utilise un appareil de mesure de coordonnées multiples (7) sur lequel la pièce à usiner (1) est disposée et au moyen duquel celle-ci est déplaçable tridimensionnellement dans un sens translatoire par rapport au dispositif sensoriel (5).
- ou bien pour positionner le dispositif sensoriel (5) par rapport à la pièce à usiner (1), on utilise un appareil de mesure à coordonnées multiples (7) sur lequel le dispositif sensoriel (5) est disposé et au moyen duquel celui-ci est déplaçable tridimensionnellement dans un sens translatoire par rapport à la pièce à usiner (1).

17. Procédé selon l'une des revendications 1 à 16, **caractérisé en ce que** le médium qui sort est recueilli.

18. Procédé selon l'une des revendications 1 à 17, **caractérisé en ce que** la pièce à usiner (1) est disposée et orientée par rapport au dispositif sensoriel (5) de sorte que le jet (4) parcourt le plan qui est déployé par l'axe X et l'axe Y du système de coordonnées sensorielles (SKS).

19. Procédé selon l'une des revendications 1 à 18, **caractérisé en ce que** la pièce à usiner (1) est un corps creux qui présente une pluralité de trous (2) alimentés par un médium (3) se trouvant sous pression, tous les trous (2), mis à part un, étant fermés ou obtrués pour l'application du procédé.

20. Procédé selon l'une des revendications 1 à 19, **caractérisé en ce que** le médium (3) est recueilli après être passé par le trou (2) et se trouve dans un circuit.

21. Procédé selon l'une des revendications 1 à 20, **caractérisé en ce que** le médium (3) utilisé est un liquide ou un gaz.

22. Procédé selon la revendication 21, **caractérisé en ce que** une source lumineuse immergée dans le liquide est utilisée pour éclairer le jet (4) de l'intérieur en exploitant un effet de conduit de lumière.

23. Procédé selon la revendication 21, **caractérisé en ce que** le médium (3) utilisé est un liquide ou un gaz auquel est ajouté un colorant.

24. Procédé selon la revendication 21, **caractérisé en ce que** le médium (3) utilisé est un liquide luminescent ou un gaz luminescent.

25. Procédé selon la revendication 21, **caractérisé en ce que** le médium utilisé est de type à se trouver à l'état liquide avant l'entrée dans le trou (2) et à l'état gazeux ou d'aérosol après sa sortie du trou (2).

26. Procédé selon l'une des revendications 1 à 25, **caractérisé en ce que** le trou (2) est conformé en cône et l'angle cônique du trou (2), ainsi que le diamètre de la surface qui est déployée par le bord de sortie du trou (2) sont déterminés à partir de l'angle d'ouverture ou de l'angle de rétrécissement du jet, à partir de son diamètre à un endroit donné et à partir de l'éloignement de cet endroit par rapport au bord de sortie du trou (2).

27. Procédé selon l'une des revendications 1 à 26, **caractérisé en ce que** le procédé s'effectue sous vide.

28. Procédé selon la revendication 21, **caractérisé en ce que**,
le liquide ou le gaz sont réchauffés par rapport à la température ambiante et le dispositif sensoriel (5) utilisé est de type à pouvoir capter le rayonnement thermique du liquide ou du gaz.

29. Dispositif de mesure du diamètre d'un trou (2), en particulier un évidement ou un perçage (2), dans une pièce à usiner (1), dans lequel le trou (2) est alimenté d'un côté par un médium (3) se trouvant sous pression, de sorte que le médium (3) passe à travers le trou (2) et qu'un jet (4) du médium (3) sort du trou (2) après être passé par celui-ci,
**caractérisé par**
- un générateur de pression, en particulier une pompe à haute pression (11) qui est en mesure de mettre un médium (3) sous pression, et
- un dispositif sensoriel (5), en particulier une caméra CCD (5) comportant un objectif (6) au moyen duquel le dispositif sensoriel (5) est en mesure de fournir une reproduction bidimensionnelle (B',B1,B2,B3,B4,B5,B6) et de reproduire avec netteté dans cette dernière au moins un segment du jet (4) comme image du jet (SB',SB1,SB2,SB3,SB4,SB5), et comportant un capteur, en particulier une matrice CCD qui est en mesure de capter la reproduction bidimensionnelle (B',B1,B2,B3,B4,B5,B6) en une résolution bidimensionnelle,
de sorte que le diamètre du jet (4) est déterminable à l'aide du dispositif sensoriel (5) à partir de l'échelle de reproduction de l'objectif (6), de la largeur de l'image du jet (SB',SB1,SB2,SB3,SB4,SB5), ainsi que de l'écart entre le dispositif sensoriel (5) et le segment du jet (4) reproduit avec netteté, et que le diamètre du trou (2) est déterminable à partir du diamètre du jet (4).

30. Dispositif selon la revendication 29, **caractérisé en ce que** un système de coordonnées de la pièce à usiner (WKS) tridimensionnel se rapporte à la pièce à usiner (1) et qu'un système de coordonnées sensorielles (SKS) tridimensionnel se rapporte au dispositif sensoriel (5).

31. Dispositif selon l'une des revendications 29 ou 30, **caractérisé en ce que** le dispositif sensoriel (5) est de type à profondeur de champ limitée.

32. Dispositif selon l'une des revendications 29 à 32, **caractérisé en ce que** le dispositif présente un système laser de mesure des écarts au moyen duquel la distance entre le dispositif sensoriel (5) et le jet (4) est mesurable.

33. Dispositif selon l'une des revendications 29 à 32, **caractérisé en ce que**,
le dispositif présente un système de mesure de coordonnées multiples (7), au moyen duquel la pièce à usiner (1) est déplaçable par rapport au dispositif sensoriel (5) ou le dispositif (5) par rapport à la pièce à usiner (1) dans un sens translatoire tridimensionnel.

34. Dispositif selon l'une des revendications 29 à 32, **caractérisé en ce que** le médium sortant peut être recueilli.

35. Dispositif selon l'une des revendications 29 à 34, **caractérisé en ce que** la pièce à usiner (1) est disposée et orientée par rapport au dispositif sensoriel (5) de sorte que le tracé du jet (4) parcourt le plan qui est déployé par l'axe X et l'axe Y du système de coordonnées sensorielles (SKS).

36. Dispositif selon l'une des revendications 33 ou 34, **caractérisé en ce que** le système de mesure de coordonnées multiples (7) présente un axe de déplacement X, un axe de déplacement Y et un axe de déplacement Z, et que la pièce à usiner (1) est disposée et orientée par rapport à l'appareil de mesure de coordonnées multiple (7) de sorte que le tracé du jet (4) parcourt le plan qui est déployé par l'axe de déplacement X et l'axe de déplacement Y de l'appareil de mesure de coordonnées multiples (7).

37. Dispositif selon l'une des revendications 29 à 36, **caractérisé en ce que** la pièce à usiner (1) est logée de façon à pouvoir tourner autour d'un axe dans un palier rotatif (9).

38. Dispositif selon la revendication 37, **caractérisé en ce que** la pièce à usiner (1) est une buse d'injection (1) pour une machine à combustion interne et que le palier rotatif (9) est installé de sorte qu'il autorise une rotation de la buse d'injection (1) autour de son axe longitudinal.

39. Dispositif selon l'une des revendications 29 à 38, **caractérisé en ce que** la pièce à usiner (1) est un corps creux qui présente une pluralité de trous (2) alimentés par un médium (3) se trouvant sous pression, tous les trous (2), mis à part un, pouvant être bouchés ou obtrués au moyen d'un mécanisme de verrouillage, ou le médium sortant pouvant être recueilli.

40. Dispositif selon l'une des revendications 29 à 39, **caractérisé en ce que** le dispositif présente un réceptacle collecteur (13) ouvert vers le haut, à l'intérieur duquel le jet (4) est dirigé et qui est relié avec le générateur de pression (11), de sorte que le médium, après être passé par le trou (2), parvient dans le réceptacle collecteur (13), et de là, au générateur de pression (11), et , de ce dernier, parvient à nouveau au trou (2), de sorte que le médium (3) se trouve dans un circuit.

41. Dispositif selon l'une des revendications 29 à 40, **caractérisé en ce que**,
le médium (3) est un liquide ou un gaz.

42. Dispositif selon la revendication 41, **caractérisé en ce que** le dispositif présente une source lumineuse immergeant le liquide, laquelle est en mesure d'éclairer le jet (4) de l'intérieur en exploitant un effet de conduit de lumière.

43. Dispositif selon l'une ou l'autre des revendications 41 ou 42, **caractérisé en ce que**
le médium (3) reçoit un ajout de colorant.

44. Dispositif selon la revendication 41, **caractérisé en ce que** le médium (3) est un liquide luminescent ou un gaz luminescent.

45. Dispositif selon la revendication 41, **caractérisé en ce que** le liquide (3) ou le gaz peuvent être chauffés par rapport à la température ambiante au moyen d'un chauffage et que le dispositif sensoriel (5) est en mesure de capter le rayonnement thermique du liquide (3) ou du gaz.
